(19) Europäisches Patentamt
European Patent Office
Office européen des brevets

(11) EP 1 902 362 B1

(12) **EUROPEAN PATENT SPECIFICATION**

(45) Date of publication and mention
of the grant of the patent:
**11.04.2018 Bulletin 2018/15**

(51) Int Cl.:
*G06F 9/44* *(2018.01)*      *G06F 15/82* *(2006.01)*

(21) Application number: **06754133.4**

(22) Date of filing: **06.06.2006**

(86) International application number:
**PCT/EP2006/005357**

(87) International publication number:
**WO 2006/131297 (14.12.2006 Gazette 2006/50)**

(54) **DATA FLOW-BASED INFORMATION PROCESSING SYSTEM AND METHOD**

AUF DATENFLUSS BASIERENDES INFORMATIONSVERARBEITUNGSSYSTEM UND -VERFAHREN

SYSTÈME ET PROCÉDÉ DE TRAITEMENT D'INFORMATIONS BASÉ SUR LE FLUX DE DONNÉES

(84) Designated Contracting States:
AT BE BG CH CY CZ DE DK EE ES FI FR GB GR HU IE IS IT LI LT LU LV MC NL PL PT RO SE SI SK TR

(30) Priority: **09.06.2005 RU 2005117816**

(43) Date of publication of application:
**26.03.2008 Bulletin 2008/13**

(73) Proprietor: **Sciensys**
75016 Paris (FR)

(72) Inventor: **Burtsev, Vsevolod Sergeyevich deceased (RU)**

(74) Representative: **Reinhardt, Yves**
THARINDER
6ième étage
48 Rue Saint-Honoré
75001 Paris (FR)

(56) References cited:
**US-A- 5 241 635      US-A- 5 301 141**

- **BURTSEV V S ET AL: "ASSOCIATIVE MEMORY OF NEW GENERATION SUPERCOMPUTERS BASED ON OPTICAL INFORMATION PROCESSING PRINCIPLES" OPTICAL COMPUTING AND PROCESSING, TAYLOR AND FRANCIS, LONDON, GB, vol. 2, no. 3, 1 July 1992 (1992-07-01), pages 161-172, XP000342513 ISSN: 0954-2264**
- **BURTSEV V S: "APPLICATION OF OPTICAL METHODS OF INFORMATION PROCESSING IN A SUPERCOMPUTER ARCHITECTURE" INTERNATIONAL JOURNAL OF OPTOELECTRONICS (INCL.OPTICAL COMPUTING & PROCESSING), TAYLOR & FRANCIS, LONDON, GB, vol. 9, no. 6, 1 November 1994 (1994-11-01), pages 489-503, XP000521306 ISSN: 0952-5432**
- **KAVI K M ET AL: "Design of cache memories for dataflow architecture" JOURNAL OF SYSTEMS ARCHITECTURE, ELSEVIER SCIENCE PUBLISHERS BV., AMSTERDAM, NL, vol. 44, no. 9-10, June 1998 (1998-06), pages 657-674, XP004128068 ISSN: 1383-7621**
- **LEE B ET AL: "DATAFLOW ARCHITECTURES AND MULTITHREADING" COMPUTER, IEEE SERVICE CENTER, LOS ALAMITOS, CA, US, vol. 27, no. 8, 1 August 1994 (1994-08-01), pages 27-39, XP000469772 ISSN: 0018-9162**

## Description

### FIELD OF THE INVENTION

The invention relates to a data flow-based information processing system and to a data flow-based information processing method.

### BACKGROUND OF THE INVENTION

Currently-existing computers are typically based on the so-called *von Neuman* architecture in which a single processor processes a stream of instructions in sequence, and data and instruction share the same memory, implementing the so-called control flow computing architecture. The demand for greater processing power of computer systems is however always on the increase. On one hand, processor performance has greatly increased over the last years, but is nevertheless not considered as sufficient. On the other hand, processing power was increased by using multiprocessor systems, i.e. systems with several processors having shared RAM memory. However, such multiprocessor systems involve memory-access latencies and usually make use of cache memories which in turn require management of cache coherence. As a result, the overall processing performances of such multiprocessor systems tends to be limited because the processing performance of each processor decreases when the number of processors is increased. Alternatively or additionally, processing performance can also be increased by using multicomputer architectures, i.e. several computers which are interconnected. But there is also a requirement for synchronizing data between the computers which similarly results in performance limitations.

Due to these limitations which result from the traditional *von Neuman* architecture, another data processing architecture was recently proposed which relies on the data flow principle and the use of associative memories (AMs), also called content-addressable memories (CAMs), which prevents waste of time for data synchronization and substantially reduces waste of time for data transmission between processors. The principle thereof is described for associative memories of optical type in the following documents :

- Optical principles of information processing in a supercomputer architecture, Vsevolod S. Burtsev, Optical Computing and Processing, 1991, volume 1, number 4, pages 269-274;
- Optical associative memory for high-performance digital computers with nontraditional architectures, V. S. Burtsev and V. B. Fyodorov, Optical Computing and Processing, 1991, volume 1, number 4, pages 275-288; and
- Problems of work loading in parallel computing systems and a new supercomputer architecture, Vsevolod. S. Burtsev, High Performance Computing Conference, September 1994.

These principles were implemented later with associative memories of the semiconductor type such as described in EP-A-0 886 224, WO-A-99/08172, WO-A-99/42927, US-B-6,243,800, US-B-6,298,433 and US-B-6,370,634.

A drawback of these systems is that they require an associative memory of high volume for storing intermediate results of processing. Another drawback is due to the fact that an associative memory can get full during processing while additional data should still be written therein. In such a case, the data processing system gets into a deadlock and the whole data processing eventually gets stopped. It would be possible to increase the size of the associative memory to overcome this issue, but it would lead to increase the costs as associative memories are expensive in comparison to usual RAM.

It may further be referred to the following documents:

- Burtsev V S et al: "Associative memory of new generation supercomputers based on optical information processing principles" Optical Computing And Processing, Taylor And Francis, London, GB, vol. 2, no. 3, 1 July 1992 (1992-07-01), pages 161-172, XP000342513 ISSN: 0954-2264; and
- Burtsev V S: "Application of optical methods of information processing in a supercomputer architecture" International Journal Of Optoelectronics (Incl. Optical Computing & Processing), Taylor & Francis, London, GB, vol. 9, no. 6, 1 November 1994 (1994-11-01), pages 489-503, XP000521306 ISSN: 0952-5432.

### SUMMARY OF THE INVENTION

The object of the present invention is to alleviate at least partly the above mentioned drawbacks and to provide a data flow-based information processing method and system which can be embodied e.g. in personal computers, in workstations and/or supercomputers.

This object is achieved with a data flow-based information processing system of claim 1 and a data flow-based information processing method according to claim 27.

Preferred embodiments are defined in dependent claims.

Further features and advantages of the invention will appear from the following description of embodiments of the invention, given as non-limiting example, with reference to the accompanying drawings listed hereunder.

### BRIEF DESCRIPTION OF THE DRAWINGS

Fig. 1 illustrates the data flow concept.

Fig. 2 illustrates schematically an associative memory of binary type.

Fig. 3a, 3b and 3c show the basic structure of the data and instructions in a data processing system of the invention.

Fig. 4 shows schematically the basic structure on which the data processing system according to the invention is based.

Fig. 5 shows schematically an associative memory of ternary type.

Fig. 6 shows schematically a more complete structure of a data processing system according to the invention for preventing deadlocks.

Fig. 7a and 7b show the structure of data in an embodiment of the invention.

Fig. 8 shows a flow chart illustrating the processing carried out on tokens output by executive units of the data processing system according to the invention.

Fig. 9 shows schematically a workstation according to the invention.

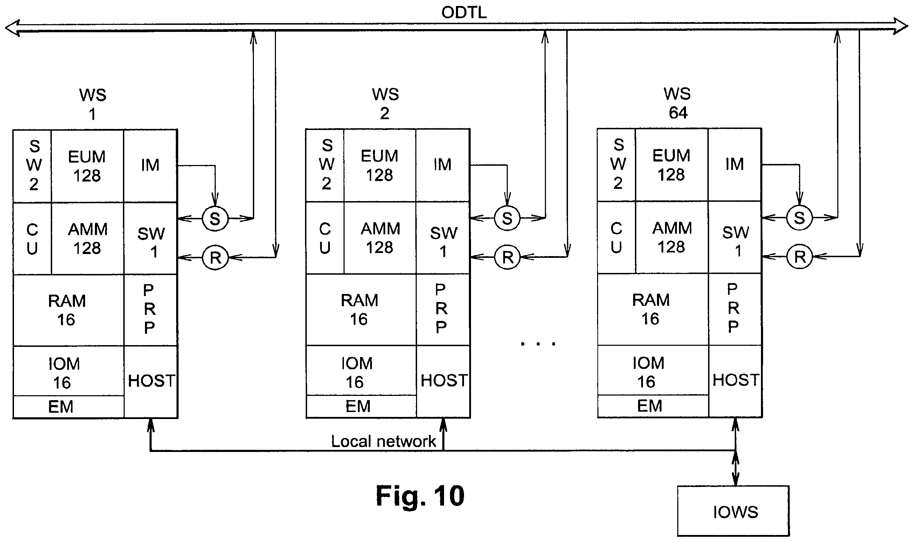

Fig. 10 shows schematically a multicomputer architecture according to the invention.

DETAILED DESCRIPTION OF THE INVENTION

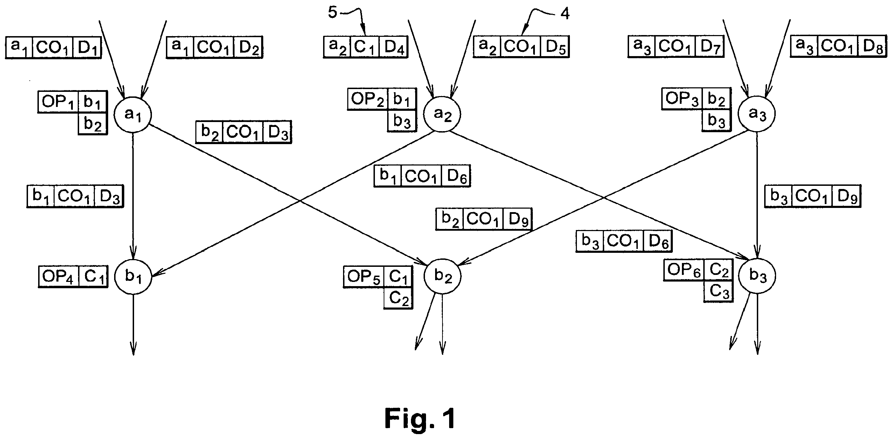

Any computational processing can be represented as a data flow graph such as shown in Fig. 1. Fig. 1 shows only a part of a data flow graph for the sake of convenience. Each node a1, a2, a3, b1, b2, b3 represents an operator. Each operand moves along an arrow to an operator. When two operands reach an operator, this operator performs its operation on the two operands and the result moves along the arrows from that operator to the next operator(s) and so on.

The basic structure of the core of a data processing system according to the invention which works according to the data flow principle comprises:

- at least one executive unit module adapted to output tokens containing at least a key and an operand;
- at least one associative memory module adapted:

  - to receive a token;
  - to store a received token;
  - to search for at least one stored token with a received token by comparing the key of the stored tokens with the key of the received token;
  - to form a pair of operands from a received token and a stored token found with the received token;
  - to output the formed pair; and
  - to erase a stored token;

- means for sending pairs output by the at least one associative memory module to the at least one executive unit module; and

- means for sending tokens output by the at least one executive unit module to the at least one associative memory module.

So, when receiving such a pair output by an associative memory module, the executive unit can process the paired operands and as a result thereof it can output one or several tokens containing each resulting operand.

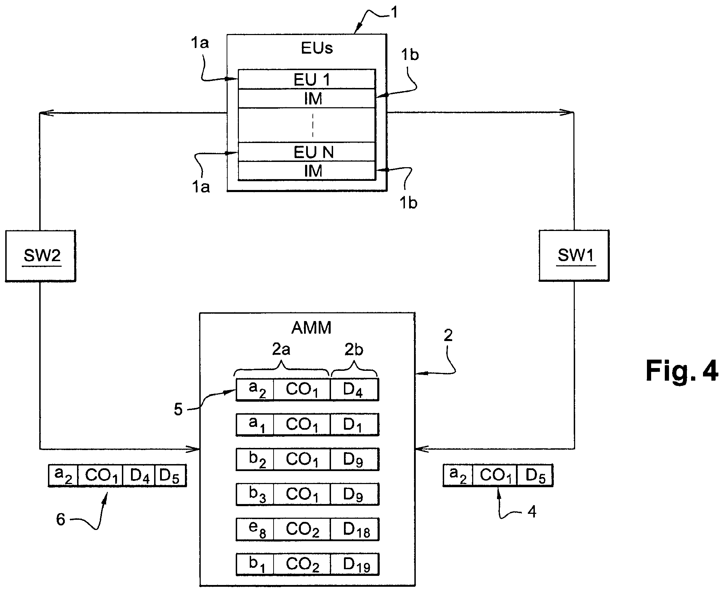

We will describe an embodiment of this core in more detail with reference to Fig. 4. The data processing system, abbreviated hereafter DPS, comprises an executive unit 1 comprising preferably a plurality N of executive unit modules 1a, at least one associative memory module 2 and two switches SW1 and SW2. The DPS may comprise only one associative memory module, but comprises preferably several associative memory modules, hereafter abbreviated AMMs. For sake of convenience, Fig. 4 will be described for the case where the DPS comprises only one AMM which is referenced by reference numeral 2.

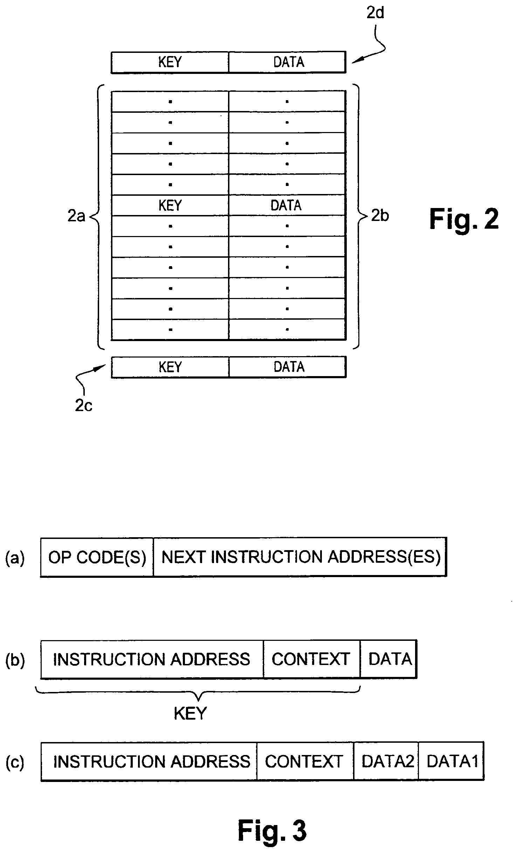

Associative memories are known in the art. Fig. 2 shows schematically the main structure of one associative memory module. Typically, the AMM comprises two storage arrays. The first array 2a corresponds to the content-addressable part of the AMM and comprises a determined number of locations having each a same given size, i.e. a same given number of bits. A respective memory location in the second array 2b is associated to each location in the first array 2a. The AMM is adapted to receive data e.g. via a bus which is written in an input register 2c. Register 2c comprises a key part corresponding to content-addressable part 2a and a data part corresponding to second array 2b. In particular, the data written in the key part of input register 2c may serve to carry out a search through the content-addressable part 2a of the AMM. Therefore, the bit pattern to be searched - which is called a search key - is written in key part and then all the bits of the register are compared with the corresponding bits of each non-free location of content-addressable part 2a of the AMM. If all the bits of a non-free location in content-addressable part 2a are identical to the ones in the search register, it means that the content of this location matches with the content of the key part of input register 2c, i.e. with the search key. As a consequence, the AMM reads the content of this location in content-addressable part 2a and of the corresponding location in the second array 2b based on their respective address in the respective array and writes it in an output register 2d; these operations are carried out similarly as in the case of conventional RAM. The AMM is also designed to handle the case in which several locations of content-addressable part 2a match the key in the key part of input register 2c, i.e. in case of multiple matches. In such a case, the content of the corresponding locations in the AMM is output in output register 2d e.g. in a sequential way. Associative memories are very fast (e.g. about 5-10 ns) for performing key-search operations due to the fact that the bit comparisons are generally carried out at hardware level simultaneously on all the non-free locations of the content-addressable part 2a. Second part 2b is usually conventional RAM. These operations are carried out under the control of a control unit of the AMM.

Beside the search operation, the control unit of the AMM also carries out other operations. Notably, the control unit manages the free status of the locations in the AMM, e.g. by handling a FIFO buffer containing the address of every free location in content-addressable part 2a of the AMM. It provides for writing data in the next free location of the content-addressable part 2a and in the corresponding location in array 2b. It also provides for setting to free the status of a location of the AMM e.g. after its content was read and written to output register 2d following a search operation. For the sake of convenience, one will understand hereafter that when mentioning the action of erasing the content in a location in the AMM or clearing a cell in the AMM, this means in fact that its status is set to free unless specified otherwise. Further functionalities of the AMM will be described later when describing the way of working of the DPS.

Reverting now to Fig. 4, each executive unit module 1a - hereafter abbreviated EUM - of the DPS comprises a computational unit 1a such as an arithmetic and logic unit (ALU) and has access to an instruction memory 1b. All of the EUMs are preferably identical. Each EUM is able to perform any data processing task required by the program(s) run on the DPS, this independently from the other EUMs. Thereby, the EUMs provide the ability for parallel processing. Nevertheless, the DPS could comprise only one EUM.

The instruction memory - hereafter abbreviated IM - contains the instructions of the user program(s) to be run by the data processing system. The IM gives each EUM the possibility to access all the instructions of the whole program(s). So, each EUM has the possibility to perform any part of the program(s) run by the data processing system. The hardware implementation of the executive units and the IM may be done similarly to computers of the prior art. In particular, the IM may be conventional RAM and can be implemented in different ways. For instance, each EUM may have its own IM containing the whole program(s). Alternatively, there may be only one IM common to all the EUMs. Alternatively, there may be several IMs, each one being common to a respective group of EUMs. Further, each EUM may have its own RAM in which pages of instructions can be loaded from a larger RAM containing the whole program(s), the pages being loaded in the smaller RAM according to the instruction address requested for data processing by the EUM. As in the prior art, each EUM may comprise fast registers and cache memory.

When executing an instruction, each EUM outputs the result in the form of one or several tokens of the type shown in Fig. 3b. Such a token is a bit pattern divided in two main parts, a key part and a data part. The key part comprises a field containing an instruction address in the IM and the remainder thereof contains context information. The data part contains an operand on which an operation will be performed subsequently along with the operand of another token and as a result a further operand may be provided by this operation. For sake of convenience, such tokens are illustrated in Fig. 1 beside each arrow in which the first box contains the address of the next node, the second box the context information and the third box corresponds to the data part (first, second, and third boxes being counted from the left on).

Each token output by any EUM 1a is sent to AMM 2 via switch SW1. AMM 2 is used for pairing two operands on which an operation will be performed subsequently. The pairing operation in AMM 2 takes place as follows. Depending on the case, each token coming from the EUMs is either stored in AMM 2 or is used for pairing its operand in the data field with an operand in the data field of another token previously stored in AMM 2. More precisely, for a token arriving at AMM 2, the key part thereof - i.e. the part containing the instruction address and context information - is written in search register 2c for carrying out a search through content-addressable part 2a of AMM 2. In case there is not any match, the token is written into AMM 2 at the next free location, the key part of the token being written in content-addressable part 2a at this free location and the data part thereof in the corresponding location in second memory array 2b.

In case there is a match, this means that a token in AMM 2 has the same key part as the incoming token. This situation is illustrated in Fig. 4 where token 4 will match token 5. In this case, AMM 2 forms a bit pattern of the type shown in Fig. 3c by using the content of the two matching tokens. The bit pattern of this type resulting from token 4 and token 5 is indicated by reference 6 in Fig. 4. Such a bit pattern - that we will call a 'pair' - comprises:

- a field containing the instruction address in the IM which is the same as in the two matching tokens;
- context information which is the same as in the two matching tokens;
- a field, noted DATA 1 in Fig. 3c, containing the operand contained in one of the matching tokens; and
- a field, noted DATA 2 in Fig. 3c, containing the operand contained in the other of the matching tokens.

Thus, the so-called pair formed by AMM 2 contains a pair of operands on which a subsequent operation will be performed. Further, the matching token which was used for forming a pair is erased in AMM 2 and thus its location in AMM 2 is free for a subsequent token to be written into AMM 2. However, in improved embodiments, the matching token may be erased at a later stage e.g. in case it is used for forming several pairs as will be described later.

The pair formed by AMM 2 is written in a ready-pair buffer register not shown - abbreviated hereafter RPBR - from which it is provided to one of the EUMs 1a via switch SW2. Switch SW2 provides the pair to any one of the EUMs which is immediately or first available for processing. Upon receipt, the EUM reads the instruction address in the pair and reads instructions from this address in the IM. As illustrated in Fig. 3a, the instructions at this address contain basically at least one operation code and the address of the next instruction in the IM. In Fig. 1, the instructions are indicated beside each node by OPi, i being 1,2,3,4,5 and 6, designating an operation code followed by the identifier(s) of the next node(s) to which the result has to be sent. The EUM performs the operation - corresponding to this at least one operation code - on the two operands in the pair. Then, the EUM forms a token of the type shown in Fig. 3b with its key part containing as instruction address the next-instruction address read in the IM and the data part containing the result of the operation which will be an operand for a next operation. One will understand that context information written in the formed token may be different from context information in the pair as the EUM may change it according to the instructions read in the IM. This token is then sent to AMM 2 via switch SW1 where it undergoes the process at the level of AMM 2 previously described.

As a result, the described data processing system works according to the data flow principle.

One will understand that the operations corresponding to the operation codes to be executed by the EUM may be any operation its computational unit is able to execute such as arithmetical and logical operations. Similarly, operands can be of any type such as numbers or characters.

One will understand that one or several instructions or a reference to a subprogram can be read in the IM at the instruction address contained in the pair. As a result, the EUM may form a plurality of tokens of the type shown in Fig. 3b each of which includes a respective next-instruction address, all these tokens being sent to AMM 2 for undergoing the usual process at the level of AMM 2.

The tokens output by the EUMs 1a may not only contain an operand in their part stored in array 2b of AMM 2 (i.e. the part of the token not including its key field), but also further information e.g. information useful for the management of the tokens in the DPS as will be described later. It is also possible to have the instruction address written in the part not comprised in the key of the tokens. The pairs may also further information than described in Fig. 3c such as some processing management information to be used by EU 1.

The context information allows to further distinguish the tokens from each others and is usually set by the user program or by the operating system. In particular, the context information in the key part of the tokens and in the pairs identifies the particular data set to which the operand belongs as e.g. several data sets may use the same program in the DPS.

As mentioned, it is advantageous that the DPS comprises several AMMs 2 for of a single one. Indeed, a search through the content-addressable part of all AMMs - which can be done simultaneously - when several are used is quicker than if a single large AMM is used. In this case, each AMM stores whole tokens as in the case of a single AMM, i.e. a token is not split in several parts which are each stored in another AMM. The tokens are dispatched among the AMMs preferably according to a hash function. Therefore, a given part - i.e. given bits - of the context information part of tokens 2b may be dedicated to the hash function. In other words, when forming a token, the EUM determines to which AMM it should be sent and writes accordingly an AMM identifier in the hash function part of the token. Switch SW1 sends the token to the AMM identified in the hash function part of the token. The RPBR is preferably common to all the AMMs.

The described DPS is very efficient in comparison to the *von Neuman* architecture as data transmission latencies are reduced and provides for "hands free" data synchronization in the computing process.

However, in a DPS of the described type, the associative memory may get full with tokens so that no further token can be written in it. When the DPS makes use of a plurality of AMMs, the problem can arise at the level of any one of the AMMs while others are not full due to an uneven dispatching of the tokens among them by the hash function. As a result, the associative memory or at least a module thereof stops its processing, resulting in a deadlock of the DPS.

To solve this problem, the invention proposes to adjoin a second memory to the DPS core described previously, this second memory being adapted to store tokens. To summarize, the data flow processing system comprises:

- at least one executive unit module adapted to output tokens containing at least a key and an operand;
- at least one associative memory module adapted:

  - to receive a token;
  - to store a received token;
  - to search for at least one stored token with a received token by comparing the key of the stored tokens with the key of the received token;
  - to form a pair of operands from a received token and a stored token found with the received token;
  - to output the formed pair; and
  - to erase a stored token;

- a second memory adapted to store tokens and to output stored tokens;
- means for sending pairs output by the at least one associative memory module to the at least one executive unit module;
- means for sending tokens output by the at least one executive unit module to the at least one associative memory module;

• a control system adapted:

    - to cause tokens output by the at least one executive unit module to be stored in the second memory; and

    - to cause tokens stored in the second memory to be sent to the at least one associative memory module.

Thus, the control system can cause tokens to be temporarily stored in the second memory instead of storing them in the AMM(s) if an overflow situation occurs or is about to occur. As a result, the overflowing of the AMM(s) can be avoided. More precisely, starting from the moment at which an overflow situation is contemplated or has occurred, only a part of the tokens output by the EUM(s) are stored in the second memory while the remainder of the received tokens undergo the usual pairing step and/or storing step in the AMM(s). As a result, the data processing continues as usual with the tokens which were not stored in the second memory. The tokens to be stored in the second memory can advantageously be selected to ensure or at least to render probable that the not-selected tokens will allow generation of paired operands during the time the selected ones are stored in the second memory. Later, the control unit can cause tokens stored in the second memory to undergo the usual pairing step and/or storing step in the AMM(s) when the occupation condition of the AMM(s) makes it possible.

Further, if an overflow situation occurs or is about to occur, the control unit may also transfer tokens stored in the AMM(s) into the second memory thereby freeing place in the AMM. It is preferable not to transfer all the tokens in the AMMs into the second memory, but to transfer only a part of them. Here again, the tokens to be transferred can advantageously be selected to ensure or at least to render probable that tokens output by the EUM(s) afterwards which are not stored into the second memory will generate paired operands during the time the other tokens are stored in the second memory.

The second memory preferably comprises conventional RAM or similar, i.e. memory in which the content of a location is not retrieved based on the content itself, but by the physical address of the location in the memory. Indeed, conventional RAM is less expensive than AMMs and the content-based search capabilities of AMMs are not required for the second memory.

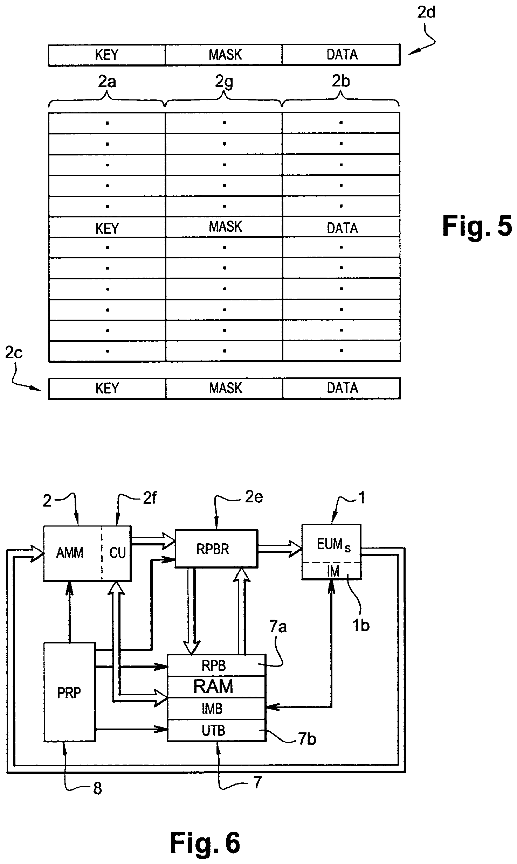

We will describe an embodiment for implementing this second memory in reference to Fig. 6.

Fig. 6 shows the DPS of Fig. 4 with additional elements. For the sake of convenience, switches SW1 and SW2 are not shown and only one AMM 2 is depicted although the DPS may have several ones. The ready-pair buffer register (RPBR) is shown by reference 2e. The DPS further comprises conventional RAM 7 and a processor 8 for regulating parallelism in the DPS. Parallelism-regulating processor 8 will be abbreviated PRP in the following.

When overflowing of AMM 2 occurs or is about to occur, a possibility consists in buffering in RAM 7 the tokens to be written in AMM 2. However, the performance of the DPS would considerably slow down during the searching in AMM 2 because the key part of each subsequent token output by EU 1 would have to be compared not only with the key part of the tokens in AM 2 - or in the given AMM if relevant - but also with the key part of tokens buffered in RAM 7. Carrying out key-part comparisons for tokens in conventional RAM by a dedicated comparator providing sequential comparison is significantly slower than for tokens in AMM 2.

So, as already-mentioned, it is preferable to store in RAM 7 only a part of the tokens output by EU 1 while the remainder of the received tokens undergo the usual pairing and storing process in AMM 2. As long as they are stored in RAM 7, these tokens are not involved in the formation of pairs. In other words, usual data processing continues only for the tokens that were not stored in RAM 7. Overflowing can be avoided due to the fact that the other tokens were stored in RAM 7. Later, when conditions in AMM 2 make it possible, the tokens are loaded back to AMM 2 for undergoing the usual pairing process by AMM 2.

In the case the DPS comprises several AMMs 2, it is possible to store tokens from only those AMMs that experience overflowing or are about to experience it to RAM 7. The tokens are loaded back to the adequate AMM by application of the hash function.

The tokens to be temporarily excluded from the usual processing - i.e. the tokens to be stored in RAM 7 - are advantageously determined dynamically so that the other tokens provide high efficiency of forming pairs and that RPBR 2e does not get empty of pairs, i.e. all the EUMs of EU 1 are processing. This can be achieved by determining the probability of pair-forming intensity for different groups of tokens and by maintaining those groups in processing which are the most active at the considered moment. As a result, different groups of tokens can be temporarily excluded from processing and loaded back successively in time. Groups of tokens can be defined on the basis of the content of the tokens other than the contained operand.

In the preferred embodiment, the tokens to be stored in RAM 7 are determined as a function of the key part of the tokens providing thereby a simple and efficient way of handling this aspect. As a result, the tokens of a given part of the virtual address space - i.e. the mathematical space defined by the key part of the tokens - are stored in RAM 7. This can be achieved by using AMMs 2 of the ternary type. AMMs of ternary type is known in the prior art. In an AMM of the ternary type, the bits in the content-addressable part can either be a logical 0 or 1 as usual, but can also be masked. A masked bit is also called a *don't care* bit. A search through the content-addressable part 2a can be carried out with a key comprising 0 and 1 bits, but also *don't care* bits. Hardware implementation usually consists in associating to the content-addressable part of the associative memory a further array of memory locations for containing mask bits which determine whether bits in corresponding locations in the content-addressable part are considered as masked or not.

Fig. 5 shows schematically the implementation thereof for AMM 2. AMM 2 comprises content-addressable part 2a and conventional memory area 2b similarly to the AMM of binary type shown in Fig. 2. However, content-addressable part 2a is extended with a further array 2g for containing mask information. To each memory location in array 2a corresponds a location in array 2g. Usually, the logical value of each bit in a location in array 2g indicates whether a corresponding bit in the corresponding location in array 2a is considered to be masked or not. Input register 2c and output register 2d are accordingly provided with a part for mask information which relates to the key part. As a result, when a key search through content-addressable part 2a of AM 2 is carried out, a token in AM 2 matches if each bit of the search key written in the key part of input register 2c and the corresponding bit of the key part of the token in array 2a of AM 2 are identical or any one of both bits is masked. This comparison is also usually implemented in hardware. The matching token with its mask information inclusively can then be written into output register 2d.

The structure of the tokens output by the EUMs are identical to those of Fig. 3b, except that they further comprise a mask part in correspondence with array 2g of AMM 2. However, the pair structure may be identical to the one of Fig. 3c, i.e. it does not need to contain the mask part of the matching tokens. In usual working conditions of the DPS, i.e. in the absence of overflowing risk for the AMM(s) 2, the data processing takes place similarly to the description made in relation to Fig. 1-4. So, the whole virtual address space is available. In this case, none of the bits of the key part of the tokens formed by EU 1 are masked. However, masked bits can be used for other purposes than limiting the available virtual address space to prevent an overflow situation as we will describe, in particular masked bits can be used by the user program to increase the efficiency of processing e.g. for performing an operation involving a same scalar with all the elements of a vector.

In case an overflow situation occurs or is about to occur in at least one AMM, a desired part of the virtual address space of the tokens is excluded by PRP 8. Therefore, PRP 8 forms a token of the type of Fig. 2b in which the required bits of the key part for identifying the desired part of the virtual address space are set accordingly to 0 or 1 while all the other bits of the key part are masked (i.e. set to *don't care)*. The content of the data field is of no importance, except if used for some processing management of this token such as exemplified later. For the sake of convenience, we will hereafter call this token a "cover token".

PRP 8 writes the cover token in AMM 2. To do this, PRP 8 cooperates with control unit 2f of AMM 2. In the case the DPS comprises several AMMs 2, the cover token may be written in each of them. In this case, the bits of the hash function field of the cover token may be masked (i.e. set to *don't care)* or set to the identifying number of the respective AMM in which it is written, thereby providing the possibility for the cover token to match the tokens sent to the respective AMM.

As a result, any subsequent token arriving at AMM 2 (i.e. written in its register 2c) belonging to this part of virtual address space will match the cover token when carrying out the usual search step through content-addressable part 2a of AMM 2 as previously described. Control unit 2f recognizes that the matching token is the cover token. This may be obtained by the fact that control unit 2f recognizes that the pair formed by AM 2 involves the cover token. The way control unit 2f recognizes a cover token will be exemplified later. As a result, control unit 2f does not form a pair or alternatively if a pair is formed with the cover token, it does not send it to RPBR 2e. Further, control unit 2f does not erase the cover token in AM 2. But control unit 2f sends this incoming token to RAM 7 in which is formed as a consequence a buffer of unloaded tokens 7b, abbreviated hereafter UTB. We will refer hereafter to these tokens as "tokens unloaded by a cover token".

Alternatively, when a received token matches the cover token as well as a usual token stored in AMM 2, control unit 2f may pair the operand of the received token with the operand of the usual matching token and output this pair because this operation does not involve storing the received token in AMM 2. But when the received token matching the cover token should be stored into AMM 2 for enabling later pairing of its operand, then control unit 2f stores it in RAM 7 instead.

Later, the tokens unloaded by a cover token can be transferred from RAM 7 to AMM 2 when the occupation level in AMM 2 makes it possible.

When RAM 7 gets full, UTB 7b may itself be expanded to external memory - not shown - such as a hard disk drive. As a result, the DPS can continue to process data on the remainder of the virtual address space while the selected part of the virtual address space is temporarily excluded from further processing. By doing so, deadlocks can be avoided or removed as the extent of processing parallelism is reduced.

At the time the cover token is written in AMM 2, tokens of the corresponding part of virtual address space may already be stored in AMM 2. Although optional, these tokens can advantageously be unloaded as well so as to free space in AMM 2. Therefore, after the cover token is written in AMM 2, the same cover token is used for carrying out a key search - by writing it in input register 2c - through the content-addressable part of AMM 2. All the tokens in AMM 2 belonging to this part of the virtual address space will match the cover token. Based on this search, control unit 2f unloads the matching tokens from AMM 2 to RAM 7. In other words, these tokens are written into UTB 7b and erased in AMM 2,. We will refer hereafter to the tokens written into AMM 2 as "written tokens" and to the written tokens transferred to RAM 7 as "unloaded written tokens". As the cover token itself was previously written in AMM 2, the cover token is also among the matching tokens. Unlike other matching tokens, control unit 2f does not erase the cover token in AMM 2 and preferably does not write it to UTB 7b.

Later, when AMM 2 is no longer experiencing overflow, PRP 8 loads the tokens in UTB 7b back in AMM 2. This may be done as follows. PRP 8 writes the unloaded written tokens back into AMM 2 at free locations thereof. Then, control unit 2f erases the cover token in AMM 2. The cover token can e.g. be located in AMM 2 by carrying out a key search with the cover token through the content-addressable part 2a of AMM 2 or alternatively by memorizing the physical address of its location in AMM 2 at the time of writing it in AMM 2. Finally, PRP 8 sends sequentially the tokens unloaded by the cover token from UTB 7b to AMM 2 for processing in the same way as for tokens arriving from EU 1. The corresponding place in UTB 7b is consequently available again. Alternatively, PRP 8 may indistinctly send back unloaded written tokens and tokens unloaded by the cover token to AMM 2 for processing all of them in the same way as for tokens arriving from EU 1.

Selecting the part of virtual address space of tokens to be temporarily excluded from processing to avoid or remove deadlocks can be done in different ways. In particular, some bits of the context information of the key of the tokens -see Fig. 2b - can advantageously be used in the DPS to identify the task and possibly the subtask to which the token belongs as will be exemplified later. As a consequence, PRP 8 can exclude tasks or subtasks thereof by using a cover token with the whole key masked, except the bits identifying the task and/or the subtask which are set accordingly. Another possibility consists in PRP 8 determining the part of virtual address space to be excluded based on the instruction address field of the tokens which will be detailed later.

One will understand that when the DPS comprises a plurality of AMMs 2, the described way of unloading tokens from AMM 2 to RAM 7 and loading them back can be carried out by PRP 8 at the level of all the AMMs, or only some of them, or just in one of them e.g. according to the AMMs in which the overflow situation occurs or is about to occur.

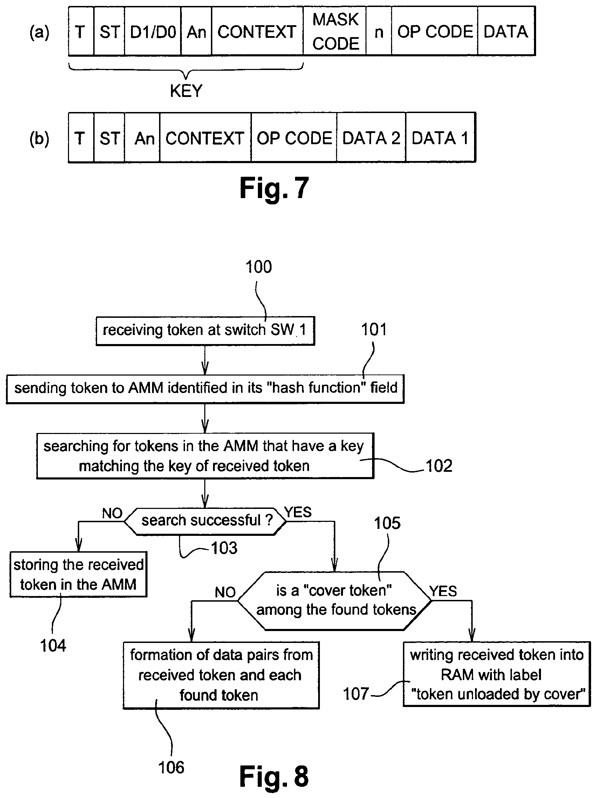

Fig. 8 illustrates the processing carried out on tokens by switch SW1 and AMMs 2 (in the case of several AMMs). Step 100 shows the receipt of a token by switch SW1 which, in step 101, dispatches the token to the appropriate AMM according to the content of the hash function field of the token. The AMM, in step 102, searches for tokens stored in it having a key matching the key of the received token. If the search is not successful (see step 103), then the AMM stores in it the received token (step 104). If the search is successful (see step 103), then the AMM checks whether a cover token is among the matching tokens (step 105). If there is no cover token among them, the AMM forms pairs with the received token and each of the matching tokens, said pairs being sent to the EUMs via the RPBR and switch SW2. If there is a cover token among them, the AMM writes the received token in RAM 7 as a "token unloaded by the cover token". The case of unloading written token is not illustrated in Fig. 8.

Fig. 6 further illustrates a solution for the case in which RPBR 2e is of determined size which is too limited, e.g. if AMM(s) 2 generate pairs more quickly than EU 1 can process them. In this situation, the pairs in RPBR 2e have to wait until an EUM get free for processing. So, it may happen that there is no more space available in RPBR 2e for subsequent pairs generated by AMM(s) 2. As a result, AMM(s) 2 would have to stop generating pairs and thus EU 1 has to stop sending tokens to AMM(s) 2. As a result, the DPS stops processing. To avoid this situation when overflowing of RPBR 2e occurs, PRP 8 expands RPBR 2e to RAM 7. Thus, when RPBR 2e is full, any additional pairs generated by AM 2 are placed in RAM 7 thereby forming a ready pair buffer 7a -abbreviated from now on RPB - in RAM 7. As soon as a place in RPBR 2e gets free, PRP 8 loads pairs in RPB 7a back into RPBR 2e by cooperating e.g. with the control unit of AMM 2. PRP 8 preferably handles RPB 7a as a FIFO. When RAM 7 is not enough, RPB 7a may itself be expanded to external memory - not shown - such as a hard drive disk. As a result, unlimited space can be provided for pairs through RAM 7, and thus deadlocks due to RPBR 2e getting full are prevented. One will understand that RPBR 2e itself can be implemented in RAM 7 in which case it may be designed as a FIFO with adaptive size controlled by PRP 8. In this latter case, RPBR 2e and RPB 7a are one and the same.

Alternatively, although it is less preferred, when RPBR 2e gets full, PRP 8 writes a cover token in all AMMs, said cover token having all its key bits masked. As a result, all tokens arriving at the AMMs are unloaded to UTB 7b and thus no further pairs are output by the AMMs. Once there is enough place again in RPBR 2e, PRP 8 erases the cover token in the AMMs and sends back to them the tokens stored in the meantime in UTB 7b.

Alternatively or additionally to , a further buffer for tokens - not shown - may be provided in the token path between EU 1 towards AMM(s) 2. This buffer may be implemented in RAM 7. It may be of a FIFO type. Its size may also be expandable in RAM 7 and further storage means such as hard drives similarly as described for RPBR 2e. Such a buffer may serve in the case EU 1 is able to send tokens more quickly than AMM(s) can process them. Although it is less advantageous, this further buffer may also serve in the case of RPBR 2e getting full: AMM(s) 2 stops then the usual pair-forming process and PRP 8 causes the tokens coming from EU 1 to go to this further buffer instead to AMM(s) 2 and when place is again available in RPBR 2e, tokens in this further buffer can again be sent to AMM(s) 2.

In reference to Fig. 7a and 7b, we will now describe an improved structure of the tokens and pairs which on one hand allows to increase the processing performances and on the other hand is particularly adapted for temporarily excluding tasks and/or subtasks from processing for avoiding or removing deadlocks. In particular, it provides the ability for regulating the extent of processing parallelism. The structure of the tokens is shown in Fig. 7a and consists in an optimization of the basic structure shown in Fig. 3b.

The key part of the token comprises a field 'An' containing an instruction address in the IM similarly as for the token of Fig. 3b. The key part of the token comprises a field 'T' for identifying the task to which this token belongs and another field ST for identifying the subtask to which this token belongs. The key part also contains a field 'D1/D2' for identifying whether the operand in the 'DATA' field is considered as the first one or the second one in the operations(s) to be carried out on them by the EU, in particular for non-commutative operations such as a subtraction or a division. Field 'D1/D2' is preferably a single bit. The remainder of the key part - identified as the field 'CONTEXT' - contains further context information.

In the case the DPS comprises several AMMs 2, a given part of the 'CONTEXT' field may comprise hash function information which is used by switch SW1 to provide the token to the corresponding AMM.

As AMM 2 is of the ternary type as explained previously in relation with Fig. 5, the token comprises a field 'MASK CODE' having preferably the same size as the key part, each of its bits defining whether a corresponding bit of the key is a *don't care* bit or not.

Beside the key part inclusively the mask code field, the token comprises a data field 'DATA' for containing an operand like in Fig. 3b and two additional fields : one noted 'OP CODE' for containing an operation code and the other noted 'n' for containing a number.

Turning to the pairs, their structure is shown in Fig. 7b. Similarly to the structure shown in Fig. 3c, a pair comprises:

- a field 'An' containing the instruction address in the IM which is the same as in the two matching tokens used for forming this pair;
- a field 'DATA 1' containing the operand contained in one of the matching tokens according to their 'D1/D0' bit, e.g. of the token having 'D1/D0' = '1' ; and
- a field 'DATA 2' containing the operand contained in the other of the matching tokens, i.e. of the token having 'D1/D0' = '0' in our example.

As a result of the 'D1/D0' field, the pair always contain the operands in a same order so that the EU carries out correctly non-commutative operations.

It also comprises a task field - noted 'T' - and a subtask field - noted 'ST' - as well as context information - noted 'CONTEXT' - which are the same as in the two matching tokens used to form this pair.

It further comprises a field - noted 'OP CODE' - containing the operation code which is the same as in the two matching tokens used to form this pair.

The basic working of the DPS is identical to the description made previously in relation to Figs. 1 to 6, but with the following differences.

The token search process through the AMMs is slightly changed. When carrying out a search with a token written in input register 2c, a stored token is considered as matching if their bits 'D1/D0' are different (Boolean operation NOT) while the remainder of their key parts are identical, being mentioned that *don't care* bits are in any case considered as matching. This can be obtained with control unit 2f of AMM 2 changing the value of bit 'D1/D0' of the token received in input register 2c after having carried out the search through AM 2 so as to store it in AMM 2 with the changed 'D1/D0' field. In the latter case, AMM 2 carries out the key bit comparison as is the case of a conventional associative memory by considering that a stored token matches an input token if all their key bits inclusively the 'D1/D0' bit are identical or masked. Alternatively, the check that the field 'D1/D0' are different may be implemented at hardware level of AMM 2.

One will understand that field 'D1/D0' is an advantageous way to ensure correct computation in the case of non-commutative operations to be carried out on the pair of operands. Indeed, it is not possible in a data flow controlled system to determine the time a token is sent to the associative memory. So, it is also unknown which of two matching tokens that are to be paired in AMM 2 arrives earlier at AMM 2 and this is written in it while the other one will arrive at AMM 2 afterwards and will match the first one already written in it during the search process through AMM 2. As mentioned in our previous example, if bit 'D1/D0' of a token is equal to "1", then at the time of forming a pair, the operand is placed in the "DATA1" field, and in the contrary case, in the "DATA2" field. So, the location of each operand can clearly be defined in the pair and the non-commutative operation is carried out correctly by the EU. In other words, the operand in field 'DATA1' arrives at a given entry of the operator e.g. the left side thereof and the operand in field 'DATA1' arrives at the other entry of the operator, i.e. on the right side of the operator in our example.

Although the described embodiment making use of the field 'D1/D0' comprised in the key part of the tokens is preferred, it is also possible makes part of the token but not within its key part. In this case, control unit 2f of the AMM controls the 'D1/D0' fields of matching tokens to make sure that their fields 'D1/D0' are different (this check may be optional) and to order properly the operands in the formed pair. Alternatively, control unit 2f may form pairs which includes the 'D1/D0' field information of the matching tokens so as to enable EU 1 to determine the order of the operand based on this information.

We will describe now the use of the operation-code field 'OP CODE' in a pair. When a pair sent by AMM 2 arrives at an EUM, this EUM reads the operation code in the pair and executes the corresponding operation on the two operands contained in the pair. The operation code contained in the pair is in fact the operation code - or the first operation code if there are several - comprised in the instructions located in the IM at the instruction address 'An' written in the pair. The EUM reads any additional operation codes contained in the instructions at the instruction address 'An' contained in the pair and performs the corresponding operations after having performed the one corresponding to the operation code contained in the pair. As described in relation to Fig. 4, the EUM forms one token containing the operation result for each next-instruction address written in the instructions in the IM. However, the EUM also reads the first or single operation code at each of said next-instruction address(es) written in the instructions and writes it in the corresponding token the EUM is forming. One will understand that the structure of the tokens formed by the EUMs is of the type shown in Fig. 7a. Then, the tokens formed by the EUMs are sent to AMM 2 via switch SW 1 for processing by AMM 2.

When the search process through AMM 2 provides no matching token stored in it, the token is stored in AMM 2, the key part of the token being written in a location of content-addressable part 2a, the mask code part in the corresponding location of mask code array 2g and the remainder - i.e. the data field 'DATA', the operation code field 'OP CODE' and the number field 'n' - in the corresponding location in the conventional memory part 2b.

In case a matching token is found in AMM 2, a pair having the structure of Fig. 7b is formed by AMM 2 by using the content of the incoming token and the matching token.

The fact an operation code is written in the tokens and as a result in the pairs makes it possible for the EUM to immediately start carrying out the corresponding operation on the operands in the pair without having to read it first in the IM meanwhile the following operation codes are read in the IM in case e.g. the processor of the EUM has a pipeline structure. Thus, processing performance is increased. One will understand that the operation code could be located in the key part of the tokens as the operation code is necessarily the same for two tokens containing operands to be paired by AMM 2.

We will now describe the use of the number field 'n' in the token of the type of Fig. 7a. The aim of number field 'n' is to significantly improve the efficiency of computation in the case all the elements of a vector (having more than one element) shall interact with a same scalar value. One will understand that field 'n' may exist independently from the 'OP CODE' field.

Assuming that the vector has N elements (N>1), the usual way to carry out the operation would be the following. On one hand, N tokens are formed containing each in their 'DATA' field a respective element of the vector, each token having a respective key. On the other hand, N further tokens are formed containing each said same scalar in the 'DATA' field, each token having a respective key for matching a respective vector element.

An improvement of this way of working consists in involving several times-i.e. N times in our example - a same token containing the scalar in the pair-forming operations - e.g. before erasing it in AMM 2 - so as to form several pairs - i.e. N pairs in our example - containing each a different element of the vector as well as this scalar. This is possible with number field 'n' the function of which is to indicate how many times this token should be used for forming pairs. We will describe now more in detail two embodiments of this improvement.

In the first embodiment of the vector operation, all elements of the vector are assigned to one and the same virtual address, i.e. each vector element is placed in the 'DATA' field of a respective token, but all of these tokens containing a vector element have a same key. In other words, the N elements of a vector are dispatched in N tokens when considering a vector comprising N elements (with N>1). As a consequence, all these tokens are sent to a same AMM by application of the hash function when the DPS comprises several AMMs 2. The "D1/D0" field of all these vector element-containing tokens is set to the same value. As a result, the AMM does not pair vector elements with each others as a token can only match a stored token in the AMM if they have a different 'D1/D0' bit as already described. As a further result, all elements of the vector arrive at the same input of the operator, thus ensuring correct computation in case of a non-commutative operation with the scalar. On the contrary, the scalar is placed in the 'DATA' field of a token having the same key as the vector element tokens , except for the 'D1/D0' bit which is set to the contrary value. As each of the vector element tokens is used for forming only one pair, their number field 'n' is set to 1. On the contrary, the number field 'n' of the scalar-containing token is set to N so as to be used for forming N pairs, i.e. with each one of the N vector element tokens. In the following, we will call a "frequency token" such a token having a value greater than 1 in its number field 'n'. The described vector element tokens and scalar tokens are formed by EU 1 in execution of the program in IM 1b.

The DPS operates as follows. Each time a token is used by the AMM to form a pair, its number field 'n' is diminished by 1, the token being discarded - i.e. is excluded from the pair formation process - when this field reaches the value zero. In our example of a vector of N elements (N>1) and assuming that K vector element tokens (K<N) were written in the AMM before the frequency token reaches the AMM, the frequency token matches the K vector element tokens in the AMM and as a result the AMM forms K pairs containing each the scalar and a respective one of the K vector elements. These K pairs are sent to EU I as usual.

After interaction with the frequency token, control unit 2f erases the K vector element tokens in the AMM due to the fact that their field 'n' is set to '1', i.e. they are used for forming a single pair each. Control unit 2f writes the frequency token in the AMM but with its field 'n' changed from N to N-K because it was already used for forming K pairs.

Subsequently, when a further vector element token arrives at the AMM, it matches the frequency token written in AMM. As a result, the AMM forms one pair which contains this vector element and the scalar. The vector element token is not written in the AMM because its number field 'n' was set to 1 and is diminished by 1 as a result of its use in the pair formation, thus reaching the value zero. On the contrary, the number field 'n' of the frequency token in the AMM is diminished by 1 by control unit 2f - i.e. from N-K to N-K-1 - as it has been used to form a further pair. This process is repeated until the frequency token has been used to form N tokens, i.e. that its number field 'n' was decreased until zero in which case the frequency token is erased in the AMM. One will understand that in the case the frequency token arrives at the AMM while none of the vector element tokens has been previously written in the AMM, the frequency token is written in the AMM with its number field 'n' set at N and the pair-forming process takes place subsequently as previously described upon arrival of the vector element tokens at the AMM. On the contrary, if the AMM already contains all N vector element tokens when the frequency token arrives at the AMM, then all N pairs are formed with the frequency token and the latter is not written in the AMM as its number field 'n' is diminished from N to zero as a consequence. One will understand that the described pair-forming process operates correctly regardless the sequence of arrival of the vector element tokens and of the frequency token at the AMM. Of course, the number field 'n' of matching tokens formed by EU 1 may be set each at 1 if it is desired to form only one pair with each token.

This first embodiment of the multiple pair forming process with a same token provides several advantages: on the average, the number of "search" operations is reduced to "N/2" in the AMM by means of multiple matches in the AMM; it is not necessary to clean out cells of the AMM after each pair formation; after the end of the multiple pair forming process, there is the possibility of sending an answerback about the completion of the process by hardware.

As an alternative, the vector element tokens may have different keys - except for the hash function field - so as to distinguish each vector element from the others. In particular, a part of the context information may be dedicated to distinguish them from each other. Their hash function field is however identical so as to be sent to a same AMM. As a consequence, the frequency token formed by the EUs I may have the corresponding bits of the context part of the key masked (i.e. set to *don't care*) so that it will match all the vector element tokens.

In the second embodiment of the vector operation, the vector element tokens are scattered among several or all AMMs 2 by application of the hash function on the contrary of the first embodiment in which all the vector element tokens are sent to a same AMM. An issue is related with the fact that the number of vector element tokens which will sent to each AMM as a result of the hash function may be unknown. In this second embodiment, the DPS operates as follows.

Assuming that the vector has N elements (N>1), EU 1 forms N vector element tokens similarly to the first embodiment each of which contains a respective vector element and has its number field 'n' set to 1. Similarly to the first embodiment, the EUs 1 form a frequency token containing the scalar, its number field 'n' being set to N. Further, the 'D1/D0' fields of the vector element tokens and the frequency token are set at a different value similarly as in the first invention. EU 1 sends the vector element tokens and the frequency token to AMMs 2 via switch SW1.

The vector element tokens are sent by switch SW1 to the AMM identified in its hash function field. However, the frequency token is sent by switch SW1 to all AMMs of AM 2 regardless the hash function. This may be obtained e.g. by the fact that the bits of the hash function field of the frequency token are all set to masked (i.e. to *don't care*) by EU 1 when forming the frequency token and as a result switch SW1 sends the frequency token to all AMMs 2. Further, switch SW1 sends the value in field 'n' of the frequency token - i.e. N in our example - as well as the key of the frequency token - or at least a part thereof that identifies the frequency token - to PRP 8 which in turn writes both in RAM 7.

When an AMM receives a token, its control unit 2f reads its field 'n'. When field 'n' contains a value greater than 1 (i.e. in the case of a frequency token), control unit 2f turns the value in the field 'n' of the token to a value corresponding conventionally to infinite ($\infty$) and gets it processed by the AMM as will be detailed hereafter.

Beside the hash function field, the vector element tokens may have different keys so as to distinguish each vector element from the others, in particular a part of the context information may be dedicated to distinguish them from each other. As a consequence, the frequency token formed by EU 1 may have the corresponding bits of the context part of the key masked (i.e. set to *don't care*) so that it will match all the vector element tokens.

Assuming that the ith AMM of the DPS has already stored in it $K_i$ vector element tokens ($K_i \leq N$) when the frequency token is sent to the AMM, the frequency token will match these $K_i$ vector element tokens and thus the AMM forms $K_i$ pairs containing each the scalar and a respective vector element. These $K_i$ pairs are sent to the EUs 1 as usual. After interaction with the frequency token, control unit 2f erases the $K_i$ vector element tokens in the AMM due to the fact that their field 'n' is set to '1', i.e. they are used for forming a single pair each. As opposed to the first embodiment, there is no need to subtract $K_i$ from the value of the 'n' field of the frequency token. Control unit 2f writes the frequency token in the AMM but by turning its field 'n' to $K_i$. Subsequently, when a vector element token arrives at the $i^{th}$ AMM, it matches the frequency token in this AMM. As a result, a pair is formed accordingly and sent to the EUs 1. The vector element token is discarded, i.e. it is not written in the AMM as a result of the fact its 'n' field was set to 1. The value in field 'n' of the frequency token in this AMM is increased by 1, i.e. is set to $K_i+1$. This process is repeated for each further vector element token arriving at the AMM. So, once the frequency token is written in an AMM, its field number 'n' indicates the number of pairs that have been formed with it by this AMM.

One will understand that the process described for the $i^{th}$ AMM is carried out in the same way for all the AMMs. Further, if no matching vector element token was written in an AMM before the frequency token is sent to it, the frequency token is written in this AMM with its field 'n' set to zero.

PRP 8 interrogates the field 'n' of the frequency token in each AMM so as to determine whether all N pairs were formed. In other words, PRP 8 monitors the value N-K, where

$$K = \sum_{i=1}^{m} K_i$$

and "m" is the number of AMMs 2 of the DPS. Interrogation may be done by PRP 8 causing the AMM to search the location of the frequency token in the AMM with help of the key of the frequency token it has previously stored in RAM 7. Alternatively, it is also possible for PRP 8 to store in RAM 7 the physical address of the frequency token in each AMM at the time the frequency token is written in the AMM, its control unit 2f providing this physical address to PRP 8; so PRP 8 can read directly field 'n' of the frequency token at the physical address in the AMM via control unit 2f.

Interrogation of the AMMs may be initiated by PRP 8 e.g. with a defined time interval. Interrogation of the AMMs may also be initiated by a user program. Therefore, the user program refers to PRP 8 e.g. as follows. An EUM by application of the user program forms a particular token - called hereafter 'interrogation token' - having the same key as the frequency token that had been previously sent to switch SW1 and a particular label in its "OP CODE" field. The interrogation token is sent to switch SW1 which sends it to all AMMs similarly as for the frequency token. Control unit 2f of each AMM upon receiving the interrogation token recognizes it by reading its 'OP CODE' field. As a consequence, control unit 2f of the AMM sends the interrogation token to PRP 8. In turn, PRP 8 interrogates field 'n' of the frequency token in each AMM as previously described.

When the value of (N-K) becomes equal to zero, PRP 8 erases the frequency tokens in all AMMs. PRP 8 may also report, if useful, to the user program the multiple-pair forming operation for this frequency token is completed.

This second embodiment provides for operation of AMMs parallel in time in the case of vector processing, it reduces the time for searching and forming tokens with different keys, cleans the cells after completing the multiple pair forming process, issues a report concerning the completion of carrying out the computation construction, does not require significant computer resources for realizing this process since much is performed on the hardware level, and reduces the number of search operations in the AMMs because of the possibility of multiple responses for all AMMs.

As mentioned, in both vector operation embodiments, PRP 8 may send an answerback to the programs. This can be achieved with PRP 8 forming a token providing the ability to notify other computer processes that the vector operation has been completely carried out. For example, the user program which initiated interrogation of the field 'n' of the frequency token by PRP 8 may obtain the answerback token as follows. In parallel with forming the mentioned interrogation token, the EUM by application of the user program forms a further token called hereafter a 'wait-answer token'. This wait-answer token is sent to an AMM in the usual way and is stored in it. PRP 8 forms the answerback token (with e.g. information for the user program in its data field) and sends it to the same AMM. The answerback token matches the wait-answer token in the AMM and as a result, the AMM forms a pair with them and sends it to EUs 1 where the user program receives the information (contained in one data field of the pair in our example). PRP 8 may determine which key to use when forming the answerback token as the key may be placed in the data field of the interrogation token.

One will understand that both vector operation embodiments may be used selectively in the DPS. Therefore, control unit 2f determines whether the first embodiment or the second embodiment applies e.g. by checking whether the hash function field of the frequency token is masked or not as it may be masked in the second embodiment on the contrary of the first embodiment.

One will also understand that the described vector operation may be implemented independently from the unloading of tokens to RAM 7 for removing or preventing overflowing of the associative memory module(s).

The described method for carrying out vector operations with a repeatedly used scalar can be used with minor changes in user programs and system programs for obtaining information concerning the course of the computational process in the DPS for a particular task, subtask or a computational process. By adapting the described method, both in the first and in the second vector operation embodiments, PRP 8 may generate tokens signaling the completion of a task, a subtask or a computational process to other computational processes. We will call such tokens as being "event tokens".

Further, a vector may consist of a plurality of event tokens. Thus, it is possible thereby to signal the completion of a more complex computational process. By interrogating PRP 8 about the completion of some computational process, the user can actually know the degree of its completion. For example, the elements of a vector may be event tokens. As an illustration, an event token may be issued upon completion of the processing of all the vector elements of a vector. If the program is written so that such an event token is itself considered as a vector element, then when all other event token elements of the event token vector are issued, a new event token is formed, and so forth. Thus, although data flow processes do not usually allow it, it can be provided information concerning the stage of completion of a task, subtasks, individual programs or even computation processes. This may also be used by system programs and user programs to practically instantaneously stop the course of tasks, subtasks, or individual programs by means of unloading tokens to RAM 7 with help of cover tokens, either in all AMMs simultaneously or in some of them. By interrogating PRP 8 concerning the completion of some computational process, the user actually knows the degree of its completion.

The use of "event tokens" has the following advantages:

- it increases the number of stored tokens because of the joint operation of AMMs with RAM 7;
- it increases the throughput of AMMs because its modular nature does not affect the capabilities of programming in the virtual address space;
- it is possible to operate with a mask for reading a vector during one search operation in the AMMs despite of their modular nature;
- it is possible to operate with a repeatedly-used token without changing the virtual address;
- both the user and the OS may obtain information concerning the course of tasks, subtasks, programs, and computational processes;
- it is possible to regulate the intensity of processing by stopping individual tasks, subtasks, or individual computational processes;
- it is possible to perform a dynamic change of all the fields of the key, i.e. the fields for task, subtask, context, mask and hash function, which significantly expands the possibility of programming in them.

We will now describe the way PRP 8 temporarily excludes from processing tokens of the type of Fig. 7a on the basis of the task and/or subtask to which they belong in order to avoid or to remove deadlocks when at least one AMM of AMMs 2 gets full.

A task differs from a subtask by the fact that subtasks may interact within the task while tasks interact only via the operating system (OS). In other words, subtasks can interact through the common virtual address space mapped to the task to which they belong.

When the DPS runs several tasks, the task to which tokens and pairs belong is identified by the task field 'T' in the token structure of Fig. 7a and in the pair structure of Fig. 7b. In other words, the virtual address space of the tokens is split by the task number written in the key part of the tokens. Similarly, the virtual address space of a task can be further split by the subtask number written in the key part of the tokens.

PRP 8 monitors the level of occupied locations in AMMs 2. When an AMM 2 is nearly full, PRP 8 makes a decision to unload a part of the virtual address space of the tokens to UTB 7b as already described in relation to Fig. 6 with a view to diminishing the parallelism in the DPS and avoiding the overflowing of AMMs 2. The part of virtual address space to be unloaded is determined by PRP 8 by selecting at least one task to be unloaded. Therefore, PRP 8 forms a cover token based on the token structure of Fig. 7a in which all the bits of the key part except the task field 'T' are masked (i. e. set to *don't care*) by appropriately setting the bits of the mask code field. The bits of the task field 'T' of the cover token are set to the task number to be unloaded. Then, PRP 8 unloads the concerned tokens into UTB 7b by using this cover token as already described in relation to Fig. 6.

When the structure of the tokens comprise an 'OP CODE' field such as in case of Fig. 7a, this field may be used by control unit 2f of an AMM 2 for identifying a cover token written in this AMM. In this case, a specific label is placed in the 'OP CODE' field of the cover token upon formation thereof by EU 1, thereby enabling AMMs 2 to identify a token as being a cover token.

Alternatively, when the structure of the tokens comprises a number field 'n' such as in case of Fig. 7a, this field may be used by control unit 2f of an AMM 2 for identifying a cover token written in this AMM. In this case, the number field 'n' of a cover token may be set to '0' when issued by the EUs 1 which distinguishes it from usual tokens output by the EUs for which the number field 'n' is an integer at least equal to one. When received at an AM 2, its control unit 2f writes it in the AMM but with its field 'n' set at infinite ($\infty$) so as to distinguish it from frequency tokens as the latter are not written in AMMs with their 'n' field set at infinite ($\infty$). So, based on this field, control unit 2f recognizes that a matching token in the AMM is in fact a cover token e.g. during a key search carried out on the basis of an incoming token in which case control unit 2f sends the latter token to UTB 7b.

In still an alternative possibility, cover tokens are identified by the fact that a determined bit of their context information field of the tokens identifies whether they are cover tokens or not. In this case, this bit for usual tokens (i.e. which are used to form pairs) is masked (i.e. set to *don't care*) so as to provide the possibility to match the cover token.

In still an alternative possibility, a determined zone of physical addresses in the AMMs is exclusively assigned to cover tokens.

Still other methods to identify cover tokens are possible.

Of course, it is possible for PRP 8 to unload not only one task in UTB 7b, but several tasks by using several cover tokens, each being respective to a task. It is also possible in some cases to use one cover token with some bits of the task field 'T' being masked too in order to unload several tasks.

Instead of unloading a whole task, PRP 8 can also take the decision to unload only the tokens of a given subtask of a task. Therefore, PRP 8 forms a cover token based on the token structure of Fig. 7a in which all the bits of the key part except the task field 'T' and subtask field 'ST' are masked by appropriately setting the bits of the mask code field. The bits of the task field 'T' and of the subtask field 'ST' of the cover token are set respectively to the task number and the subtask number to be unloaded.

Of course, it is possible for PRP 8 to unload not only one subtask in UTB 7b, but several subtasks of a given task by using several cover tokens, each being respective to a subtask. It is also possible in some case to use one cover with some bits of the subtask field 'ST' being masked too in order to unload several subtasks.

Alternatively, subtasks may be identified in a more sophisticated manner. A plurality of virtual address spaces - each of which correspond to one cover token - may be assigned to one subtask. The principle for unloading remains the same except that the tokens of the subtask are unloaded to RAM 7 by using all the cover tokens corresponding to this subtask. In other words, all these cover tokens are written into the required AMM(s).

As already mentioned, in case the DPS comprises several AMMs and in case of uneven distribution of tokens between the AMMs, it may happen that one or more AMMs get overfilled while others are not overfilled, i.e. these other modules work correctly. In this case, there is no need to unload tokens from all the AMMs. It is enough for PRP 8 to unload tokens only from the AMMs getting overfilled into UTB 7b by carrying out the described unload procedure with help of cover tokens only for the concerned modules. In this case, it is not the whole task or subtask which gets unloaded but only a part thereof which uses the concerned AMMs.

UTB 7b is preferably structured by tasks, subtasks and types of unloaded tokens, i.e. tokens unloaded by cover token and unloaded written tokens.

The case in which the DPS runs in a single-tasking mode is only a particular case of the multitask mode and the unloading into UTB 7b and loading back therefrom is similar as described. But in this case, it is possible to assign the task field 'T' of the tokens to also identify subtasks in addition to the subtask field 'ST', thereby increasing the number of subtasks which can be run on the DPS simultaneously.

Frequency tokens in AMMs 2 are unloaded in the same way in the case they are included in the virtual address space part to be unloaded temporarily. In the case of frequency tokens in AMMs 2 according to the second embodiment described for vector operations, it is preferred that PRP 8 interrogates the 'n' of the frequency token in the AMM(s) to be unloaded so as to determine the number $K_i$ of pairs already formed with it. PRP 8 subtracts this number from the total number N of pairs - obtaining $N - K_i$ - and stores the result $(N-K_i)$ in RAM 7 in replacement of N previously stored. Then, PRP 8 in cooperation with control unit 2f causes the number field 'n' of the frequency token to be changed to infinite ($\infty$). Further, the bits of the hash function field of the frequency are changed from masked to the AMM-identifying number in which this frequency token is stored before being transferred to UTB 7b. This change may be done either by switch SW1 at the time it received the frequency token from EU1 or by control unit 2f at the time of unloading the written frequency token to UTB 7b. As a result, in the loading back operation, the frequency token may be sent from UTB 7b to switch SW1 which in turn sends it to the AMM according to its hash function field without changing the 'n' field of the frequency token (which is already set at infinite) on the contrary of the case it receives it from EU 1 (in which case switch SW1 changes the 'n' field to infinite when sending it to the AMMs). Upon receipt, the AMM handles the frequency token similarly as in the case it is provided by EU 1 through switch SW1 as was described earlier.

To determine when unloading tasks or subtasks and which ones as well as from which AM modules and to determine when loading tokens from UTB 7b back to AMM(s) 2 and of which task or subtask, PRP 8 can rely on various information obtainable from AM 2 and the EUs 1 such as:

- EUMs loading percentage: since pairs are sent to any one of the EUMs which is immediately or first available for processing, all EUMs are loaded equally and thus the loading percentage of one EUM is sufficient to determine whether RPBR 2e is empty;
- the extent to which each AMM is occupied: this information may be obtained from each AMM e.g. based on the size of the FIFO buffer containing the free addresses in the AMM;
- the extent of occupation of each AMM by each task or subtask: this can be obtained for each by carrying out a search through the considered AMM with a respective token similar to a cover token so as to determine the number of matches.

PRP 8 may also determine the probability of effectiveness of operations of some unloaded task or subtask. Therefore, PRP 8 may determine a ratio $R_1/R_2$, where $R_1$ is the number of tokens unloaded by the cover token and $R_2$ is the number of unloaded written tokens.

The mentioned information may be obtained without lowering productivity.

Further, PRP 8 may determine the probable intensity of forming pairs for tasks or subtasks that have not been unloaded, i.e. that are still currently processed.

Depending on such information, PRP 8 can rotate tasks or subtasks between one , several or all AMMs 2 on one hand and UTB 7b on the other hand in order to provide the highest efficiency of forming pairs and avoiding that RPBR 2e gets empty. It is therefore preferable for PRP 8 to rotate tasks or subtasks so that AMMs 2 are mainly loaded with tasks or subtasks which are the most active at the moment.

The task numbers and subtask numbers may be reused by the OS for different tasks and subtasks which are not run simultaneously.

As it results from the description, the fact the key part of the tokens identifies specifically the task and the subtask is independent of the fact that the tokens further comprise the number field 'n' and the operation code field 'OP CODE', except if one or the other is used for identifying covers.

We have described the possibility to unload tokens to UTB 7b based on the task or subtask to which they belong. But in case the DPS runs only a single task, it may happen that this single task cannot be split into subtasks or was not split into subtasks at user's level by using the subtask field 'ST'. In case an overflow situation occurs for AMMs 2, it is nevertheless possible to split the virtual address space based on the instruction address field 'An' in order to unload part of it to UTB 7b. In particular, this can be done by splitting the instruction addresses into pages. In this case, the instruction-address page to which belongs a token may be defined by some bits of the instruction address 'An' itself, e.g. by the higher bits thereof. To avoid or remove an overflow situation in one, several or all AMMs 2, PRP 8 selects one or several instruction pages and unloads the tokens having an instruction address belonging to the selected page(s) to UTB 7b by making use of one or several cover tokens having accordingly masked bits in the 'An' field. In other words, PRP 8 sends to UTB 7b tokens unloaded by cover token and/or unloaded written tokens in a similar way as previously described for tasks and/or subtasks, but based on the 'An' field.

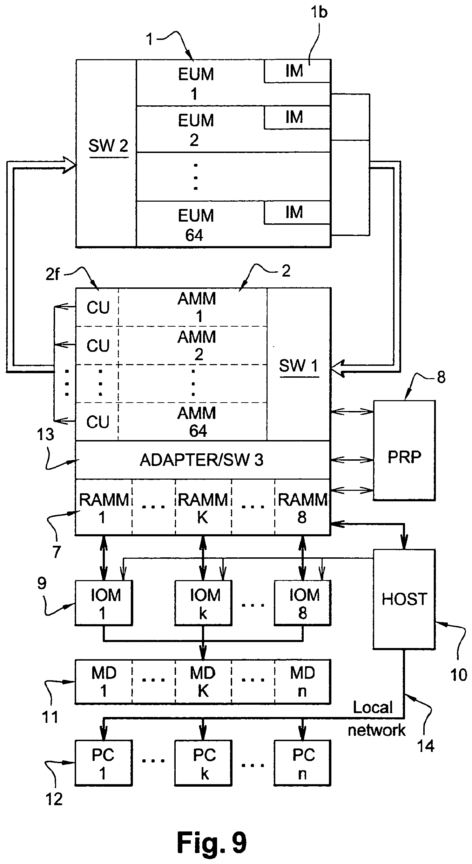

Fig. 9 illustrates a workstation implementing the DPS of the invention as described up to now. The workstation comprises:

- an EU 1 comprising 64 EUMs;
- 64 AMMs;
- 8 RAM modules - noted each RAMM in Fig. 9 - which form RAM 7;
- 8 input/output microprocessors 9, noted each IOM;
- PRP 8; and
- a processor 10 acting as a host.

Host 10 manages the interaction between the users and the DPS by using an operating system (OS) of conventional type. Host 10 interacts with personal computers 12 of users through a local network 14, connecting them to work with the DPS. In particular, host 10 may load initial data input from users into the DPS via RAM 7 and may output processing results from the DPS to users via RAM 7. Host 10 also controls the exchange between RAM 7 and external memory 11 using therefore in our example the IOMs 9. A compiler may be provided for translating user programs written in conventional high-level languages such as Pascal or C into assembler language of the workstation. External memory can be of any type such as hard drives, flash memories and CDs/DVDs. In this example, there is a respective IOM 9 for each RAM module of RAM 7.

As already described, RPB 7a and UTB 7b are arranged in RAM 7. In this example, the pairs output by the AMMs, the tokens arriving at AMMs 2 as well as those in AMMs 2 are unloaded to RAM 7 and loaded back under control of PRP 8 with help of a second memory adapter 13. The second memory adapter 13 determines the location of the unloaded pairs and unloaded tokens in RAM 7. The location may be based e.g. on the task field 'T' and subtask field 'ST' of the unloaded tokens and pairs in the case of the token and pair structures described in relation with Fig. 7. Alternatively, the location in RAM 7 may be determined on other criteria taken into consideration for unloading pairs and/or tokens such as their instruction address page. Unloaded pairs and unloaded tokens can be written from any AMM into any RAM module of RAM 7 by means e.g. of a switch SW 3 provided therefore.

In our example, the second memory adapter 13 is designed for gathering pairs and tokens in RAM 7 according to the task and/or subtask to which they belong. In any case, it is preferred that second memory adapter 13 also gathers them according to their type: pair, token unloaded by cover and unloaded written token. Therefore, two bits identifying their type are added e.g. by control unit 2f of each AMM to the unloaded pairs or unloaded tokens before forwarding them to second memory adapter 13. Further, second memory adapter 13 comprises a number of physical address registers, one for each data type, task and subtask. For instance, assuming the DPS has the possibility to run 64 tasks and/or subtasks simultaneously. In this case, the key part of the tokens comprises six bits for identifying the task and/or subtask; these six bits are those of field 'T' and 'ST' for the token and pair structures shown in Fig. 7a and Fig. 7b. As the DPS unloads three types of data in the described embodiment, i.e. pairs, tokens unloaded by a cover token and unloaded written tokens, the DPS comprises 64 x 3, i.e. 192 registers of physical address registers.

When a pair or a token enters it, second memory adapter 13 selects the appropriate group of physical address registers based on the two bits which was added to it for identifying the data type. Further, second memory adapter 13 selects one of the 64 physical address register of that group based on the six bits identifying the task and/or subtask of the pair or token. The pair or token is written into RAM 7 at the physical address indicated in the selected physical address register. Then, the selected physical address register is incremented by one so as to point to the next physical address in the RAM 7 for writing a next data of the relevant type and task and/or subtask.

The physical address registers are initially set by PRP 8 before starting a task. RAM 7 may be organized in pages. In this case, a given part of the bits of the physical addresses in RAM 7 identifies the page while the remainder thereof identifies the location within the page. As host 10 manages the resource allocation, host 10 indicates PRP 8 the page addresses for storing pairs and unloaded tokens. Upon initialization, PRP 8 writes the start address of a respective empty page in each physical address register. Similarly, in case a page is full with unloaded tokens or pairs, PRP 8 writes the start address of another empty page in the corresponding physical address register. Further, PRP 8 connects the full page with this empty page by means of a link or with a table. As a result, memory paging provides in a simple manner infinite size to UTB 7a and RPB 7a in RAM 7. Further, pages may be loaded to and loaded back from an external memory such as hard disk drives.

The operation for loading tokens and pairs back from RAM 7 to the AMMs and to RPBR 2e can be done the other way round under the control of PRP 8. The loading back operations may be simplified to some extent based on the fact it is possible to design the DPS so that both tokens and pairs can be loaded back in AMMs 2 / EU 1 processing ring with second memory adapter 13 sending them to switch SW1 via switch SW3. Any pair received at switch SW1 is forwarded to switch SW2 via any one of the AMMs: one will understand that the pair is not stored in the AMM, but only passed through it by its control units 2f. Upon receipt, switch SW2 sends the pair to the first available EUM as per the usual processing. The tokens are dispatched by switch SW1 to the appropriate AMM according to their hash function, i.e. they are sent towards the same AMM as before unloading them. Then, the tokens undergo the usual processing at the AMMs. In the case a token has an empty hash function field such as may be the case for primary data input by users, the hash function field in the token is set at the time of unloading it to RAM 7 by setting it to the identifying number of the AMM in which it was stored.

Such a workstation can reach performance of about 0.5 to 1 teraflops by appropriate hardware implementation, in particular by using micro-circuitry with very large scale integration for the different units of the DPS such as the EUs I, the switches and the AMMs and RISC-processors for host 10 and PRP 8.

The DPS according to the invention may also be used to implement a personal computer. In fact, a personal computer is a minimal configuration of a workstation such as described previously. So, it may have less EUMs and less AMMs. PRP 8 may be omitted and its functions performed by software. Host 10 comprises a processor running an operating system OS as well as the parallelism-regulating software.

Fig. 13 shows schematically a multicomputer architecture for providing increased processing performance. It comprises a plurality of workstations WS1, WS2, WS64 of the type described in reference to Fig. 9, e.g. 64 workstations in the present example. In this example, each workstation comprises 128 EUMs and 128 AMMs. The workstations are connected with each others by means e.g. of an optical data transmission line (ODTL) with high bandwidth to provide a high data communication rate, of the order of hundreds of Gbit/s. Data may be transmitted via the ODTL in the form of packets.

For enabling the workstations to work efficiently together, the token structure of Fig. 7a is slightly modified by adding to it a further field number the content of which identifies the workstation to which the token will be sent for further processing. This further field may be in its key part but could also be out of the key part. The content of this further field is also set by the EUMs upon forming the token. The structure of the pairs remain identical to the structure of Fig. 7b.

Each workstation has a selector S to which the tokens output by the EUs of this workstation are sent. If the destination address of a token is the same workstation, selector S sends it to switch SW 1 of this workstation which in turn sends it to the appropriate AMM of the workstation for usual processing as described in relation to Fig. 9. If the destination address of a token is another workstation, selector S forms a packet containing the token and sends it to this other workstation via the ODTL. Each workstation selects token packets on the ODTL according to its identification number and if relevant, it reads the token in the packet and sends the token to its switch SW1 which in turn sends it to the appropriate AMM of the workstation for usual processing as described in relation to Fig. 9.

Input and output of the data for user tasks may be done by a conventional workstation IOWS which controls all hosts 10 of all the workstations through a local network.

Generally speaking, switches SW1, SW2 and SW3 may be implemented with low voltage differential signaling channels (LVDS) well known in the art.

The invention has been described with reference to preferred embodiments. However, many variations are possible within the scope of the invention.

## Claims

1. A data flow-based information processing system, comprising:

   • at least one executive unit module (1a) adapted to output tokens containing at least a key and an operand;
   • at least one associative memory module (2) adapted:

- to receive a token;
- to store a received token;
- to search for at least one stored token with a received token by comparing the key of the stored tokens with the key of the received token;
- to form a pair of operands from a received token and a stored token found with the received token;
- to output the formed pair; and
- to erase a stored token;

• a second memory (7) adapted to store tokens and to output stored tokens;
• means for sending pairs output by the at least one associative memory module to the at least one executive unit module;
• means for sending tokens output by the at least one executive unit module to the at least one associative memory module;
• a control system (2f, 8) adapted:

- to cause tokens output by the at least one executive unit module to be stored in the second memory; and
- to cause tokens stored in the second memory to be sent to the at least one associative memory module;

wherein:

• the at least one associative memory module is adapted:

- to store tokens containing a key comprising a plurality of bits which are set to logical values "0", "1" or "don't care"; and
- to search a stored token with a received token by comparing the key of the stored tokens with the key of the received token wherein don't care bits of stored tokens are not determining in the comparison;

• the control system (2f, 8) is adapted:

- to provide a token containing a key with don't care bits;
- to cause the at least one associative memory module to store the provided token; and
- to cause a token received by the at least one associative memory module to be stored in the second memory in the case the provided token is found by the at least one associative memory module with the received token.

2. The processing system according to claim 1, wherein the control system is adapted to cause tokens stored in the at least one associative memory module to be stored in the second memory.

3. The processing system according to claim 1 or 2, wherein the control system is adapted to cause tokens to be stored in the second memory depending on the extent of occupation of the memory space in the at least one associative memory module.

4. The processing system according to any one of claims 1 to 3, wherein the control system is adapted to cause tokens stored in the second memory to be sent to the at least one associative memory module depending on the extent of occupation of the memory space in the at least one associative memory module.

5. The processing system according to any one of claims 1 to 4, further comprising an instruction memory, wherein:

• the tokens output by the at least one executive unit module further contain instruction-locating information; and
• the at least one associative memory module (2) is adapted to append to a formed pair of operands the instruction-locating information contained in at least one among the received token and the stored token used to form the pair;
• the at least one executive unit module (1a) is adapted:

- to read the instruction memory; and
- to process a received pair according to instructions read at a location in the instruction memory determined according to the instruction-locating information appended to the received pair.

6. The processing system according to claim 5, wherein the instruction-locating information is contained in a predetermined field within the key of the tokens.

7. The processing system according to any one of claims 1 to 6, wherein:

• the tokens output by the at least one executive unit module further contain at least one instruction ('OP CODE');
• the at least one associative memory module is adapted to append to a formed pair of operands the at least one instruction contained in at least one among the received token and the stored token used to form the pair; and
• the at least one executive unit module is adapted to process a received pair according to the at least one instruction appended to the received pair.

8. The processing system according to any one of claims 1 to 7, wherein the control system is adapted to cause selected tokens to be stored in the second memory, the tokens being selected in consideration of their content other than the operand.

9. The processing system according to any one of claims 1 to 8, wherein the control system is adapted to cause selected tokens to be stored in the second memory, the tokens being selected in consideration of their key.

10. The processing system according to claim 8 or 9, wherein:

   • the control system is adapted to apply a first mode of operation and a second mode of operation in which:

      - in the first mode, none of the tokens output by the at least executive unit is stored in the second memory; and
      - in the second mode, the selected tokens are stored in the second memory;

   • the control system is adapted to switch from the first mode to the second mode depending on the extent of occupation of the memory space in the at least one associative memory module.

11. The processing system according to claim 10, wherein the control system is adapted to switch from the second mode to the first mode depending on the extent of occupation of the memory space in the at least one associative memory module, the control system being adapted to cause tokens stored in the second memory to be sent to the at least one associative memory module after switching from the second mode to the first mode.

12. The processing system according to any one of claims 8 to 11, wherein:

   • the tokens output by the at least one executive unit module contain a task-identifying information ('T') and/or a subtask-identifying information ('ST'); and
   • the control system is adapted to cause selected tokens to be stored in the second memory, the tokens being selected in consideration of their task-identifying information and/or subtask-identifying information.

13. The processing system according to claim 12, wherein the task identification ('T') and/or the subtask identification ('ST') are contained in a predetermined field within the key of the tokens.

14. The processing system according to any one of claims 5 to 13, wherein the control system is adapted to cause selected tokens to be stored in the second memory, the control system selecting the tokens in consideration of their instruction-locating information.

15. The processing system according to any one of claims 1 to 14, wherein the control system is adapted to cause the at least one associative memory module to erase the token provided by the control system.

16. The processing system according to any one of claims 1 to 16, wherein:

   • the at least one associative memory module is adapted:

      - to receive tokens containing a key comprising a plurality of bits which are set to logical values "0", "1" or "don't care"; and
      - to search a stored token with a received token by comparing the key of the stored tokens with the key of the received token wherein don't care bits of the received token are not determining in the comparison;

   • the control system (2f, 8) is adapted:

      - to provide a token containing a key with don't care bits;
      - to send the provided token to the at least one associative memory module; and
      - to cause a token stored in the at least one associative memory module to be stored in the second memory in the case the stored token is found by the at least one associative memory module with the token provided by the control system.

17. The processing system according to any one of claims 1 to 16, wherein the means for sending pairs output by the at least one associative memory module to the at least one executive unit module comprises a buffer for pairs, said buffer having a size expandable in the second memory or in a third memory.

18. The processing system according to any one of claims 1 to 17, wherein the tokens output by the at least one executive unit module contain operand-order information ('D1/D0').

19. The processing system according to claim 18, wherein the at least one associative memory module (2) is adapted to form the pair of operands by ordering the operands in the pair according to the operand-order information contained in at least one among the received token and the stored token used to form the pair.

20. The processing system according to claim 18 or 19, wherein:

   • the operand-order information is contained in a predetermined field within the key of the tokens; and
   • the at least one associative memory module (2) is adapted to search for at least one stored token with a received token which have a different operand-order information from each other.

21. The processing system according to claim 18 or 19, wherein:

   • the operand-order information is contained in a predetermined field within the key of the tokens, the operand-order information being selected among two possible values;
   • the control system is adapted to change the operand-order information of a token received by the at least one associative memory to the other possible value before the at least one associative memory module (2) stores the received token; and
   • the at least one associative memory module (2) is adapted to search for at least one stored token with a received token which have an identical operand-order information.

22. The processing system according to any one of claims 1 to 21, wherein the at least one associative memory module is adapted to store a received token in the case the at least one associative memory module does not find at least one stored token with the received token.

23. The processing system according to any one of claims 1 to 22, wherein the at least one associative memory module is adapted to erase a stored token in the case the at least one associative memory module forms a pair with a received token and the stored token.

24. The processing system according to any one of claims 1 to 22, wherein:

   • the tokens output by the at least one executive unit module further contain a pair number ('n'); and
   • the control system is adapted to cause the at least one associative memory module to form a number of pairs based on a same token output by the at least one executive unit and other tokens, said number of pairs being determined by the pair number contained in the same token.

25. The processing system according to any one of claims 1 to 24, comprising several executive unit modules, wherein the means for sending pairs output by the at least one associative memory module to the executive unit modules comprise a pair switch (SW2) adapted to send a pair to any one of the executive unit modules.

26. The processing system according to any one of claims 1 to 25, comprising several associative memory modules, wherein the means for sending tokens output by the at least one executive unit module to the associative memory modules comprise a token switch (SW1) adapted to send a token to any one of the executive units, the token switch sending the token to one of the associative memory modules selected on the basis of the key of the token.

27. A data flow-based information processing method, comprising the steps of:

   a) - searching with a first token for at least one second token through an associative memory module storing tokens by comparing a key contained in each of the tokens in the associative memory with a key contained in the first token;
   b) - if no second token is found in step a), storing the first token in the associative memory module;
   c) - if a second token is found in step a), pairing an operand contained in the first token and an operand contained in the second token;
   d) - processing the paired operands for providing at least one third token;
   e) - repeating steps a) to d) with the at least one third token in place of the first token;

the method further comprising a step of:

   f) - storing temporarily the first token in a second memory before at least one of steps a) to c)

wherein step f) is carried out or not depending on the content of the first token else than the operand; and wherein:

   • the associative memory module is adapted to store tokens containing a key comprising a plurality of bits which are set to logical values "0", "1" or "don't care";
   • step a) comprises searching with the first token for at least one second token through the associative memory module by comparing a key contained in each of the tokens in the associative memory with the key contained in the first token, wherein don't care bits of stored tokens are not determining in the comparison; and
• step f) comprises the substeps of:

- providing a token containing a key with don't care bits;
- storing the provided token in the associative memory module; and
- if the provided token is found in step a), storing temporarily the first token in a second memory.

28. The processing method according to claim 27, wherein after temporary storing the first token according to step f), carrying out steps a) to d) to the first token.

29. The processing method according to claim 27 or 28, wherein:

• step c) comprises the substep of:

- appending to the paired operands instruction-locating information contained in at least one among the first token and the second token;

• step d) comprises the substep of:

- processing the paired operands according to instructions read at a location in an instruction memory determined according to the instruction-locating information appended to the paired operands.

30. The processing method according to any one of claims 27 to 29, wherein step f) is carried out or not depending on the extent of occupation of the memory space in the associative memory module.

31. The processing method according to any one of claims 27 to 30, wherein step f) is carried out from the time on the occupation of the memory space in the associative memory module exceeds a predetermined extent or is full.

32. The processing method according to any one of claims 27 to 31, wherein temporary storage of the tokens stored in step f) is ended depending on the extent of occupation of the memory space in the associative memory module.

33. The processing method according to any one of claims 27 to 32, wherein step f) is carried out or not depending on a task-identifying information and/or subtask-identifying information contained in the first token.

34. The processing method according to any one of claims 29 to 33, wherein step f) is carried out or not depending on the instruction-locating information contained in the first token.

35. The processing method according to any one of claims 27 to 34, wherein step c) comprises:

- pairing the operand contained in the first token and the operand contained in the second token by ordering the operands according to operand-order information contained in at least one among the first token and the second token.

36. The processing method according to any one of claims 27 to 35, wherein step f) comprises erasing the provided token in the second memory at the end of temporary storage.

37. The processing method according to any one of claims 27 to 36, comprising a step of:

g) - transferring temporarily tokens stored in the associative memory module to the second memory;

wherein step g) is carried out or not for a stored token depending on the content of the stored token else than the operand.

38. The processing method according to claim 37, wherein step g) is carried out based for a stored token on the same content criteria than for carrying out step f) for the first token.

39. The processing method according to claim 37 or 38, comprising the step of carrying out steps a) to d) to the tokens transferred to the second memory at the end of the temporary storage thereof.

40. The processing method according to any one of claims 37 to 39, wherein:

• the associative memory module is adapted to search for at least one stored token with a search token comprising a plurality of bits which are set to logical values "0", "1" or "don't care", by comparing the key of the stored tokens with the key of the search token wherein don't care bits of the search token are not determining for the search;
• step g) comprises the substeps of:

- providing a token containing a key with don't care bits;
- searching with the provided token for at least one second token through the associative memory module;

- transferring temporarily tokens found in the associative memory module with the provided key to the second memory.

41. The processing method according to any one of claims 27 to 40, wherein step c) comprises erasing the second token in the associative memory module.

42. The processing method according to any one of claims 27 to 40, wherein:

• the first token and the stored tokens contain each a pair number ('n');
• step c) comprises the substeps of:

- c1) pairing the operand contained in the first token and the operand contained in each second token;
- c2) diminishing the pair number in each second token by one and if the pair number in a second token becomes equal to zero, erasing the second token in the associative memory module;
- c3) diminishing the pair number in the first token by the number of pairs formed in substep c1) and if the pair number in the first token remains greater than or equal to one, storing the first token in the associative memory module.

43. The processing method according to any one of claims 27 to 40, wherein step a) comprises searching with the first token for at least one second token through a selected associative memory module among several associative memory modules storing each tokens, the associative memory module being selected on the basis of the key contained in the first token.

44. The processing method according to claim 43, wherein:

• the first token and the stored tokens contain each a pair number ('n');
• in step a), if the pair number in the first token has an initial value greater than one, searching with the first token for at least one second token through each of a plurality of associative memory modules storing tokens;
• in step b), if no second token is found in step a) for an associative memory module, storing the first token with its pair number set to zero in the associative memory module;
• step c) comprises the substeps of:

- c1) if a second token is found in step a) in an associative memory module, pairing the operand contained in the first token and the operand contained in the second token;
- c2) storing in the associative memory module the first token with its pair number set to the number of pairs formed in substep c1);
- c3) increasing the pair number in a second token by one if the initial value of the pair number of the second token was greater than one;

the method further comprising the steps of:

- reading the pair number contained in the first token stored in each associative memory module;
- comparing the sum of the read pair numbers with the initial value of the pair number of the first token; and
- if the sum of the read pair numbers equals the initial value of the pair number of the first token, erasing the first token in each associative memory module.

**Patentansprüche**

1. Datenflussbasiertes Informationsverarbeitungssystem, umfassend:

• mindestens ein Exekutiv-Einheit-Modul (1a), eingerichtet um Token auszugeben, die mindestens einen Schlüssel und einen Operanden enthalten;
• mindestens ein Assoziativ-Speicher-Modul (2) eingerichtet:

- um einen Token zu erhalten;
- um einen erhaltenen Token zu speichern;
- um nach wenigstens einem gespeicherten Token mit einem empfangenen Token zu suchen durch Vergleichen des Schlüssels der gespeicherten Token mit dem Schlüssel des empfangenen Token;
- um ein Paar von Operanden aus einem empfangenen Token und einem mit dem empfangenen Token gefunden gespeicherten Token zu bilden;
- - zur Ausgabe des gebildeten Paares; und
- - zum Löschen eines gespeicherten Token;

• einen zweiten Speicher (7), eingerichtet um Token zu speichern und um gespeicherte Token auszugeben;
• Mittel zum Senden von durch das mindestens eine Assoziativ-Speicher-Modul ausgegebenen Paaren an das mindestens eine Exekutiv-Einheit-Modul;
• Mittel zum Senden von von dem mindestens einen Exekutiv-Einheit-Modul ausgegebenen Token an das mindestens eine Assoziativ-Speicher-Modul;

• ein Steuersystem (2f, 8), eingerichtet:

- um zu veranlassen, dass von dem mindestens einen Exekutiv-Einheit-Modul ausgegebene Token in dem zweiten Speicher gespeichert werden; und
- um zu veranlassen, dass in dem zweiten Speicher gespeicherte Token an das mindestens eine Assoziativ-Speicher-Modul gesendet werden;

wobei:

• das mindestens eine Assoziativ-Speicher-Modul ferner eingerichtet ist:

- zum Speichern von Token, die einen Schlüssel enthalten, der eine Vielzahl von Bits umfasst, die gesetzt sind auf logische Werte "0", "1" oder "don't care"; und
- zum Suchen eines gespeicherten Token mit einem empfangenen Token durch Vergleichen des Schlüssels von gespeicherten Token mit dem Schlüssel des empfangenen Token, wobei don't care Bits von gespeicherten Token beim Vergleich nicht ausschlaggebend sind;

• das Steuersystem (2f, 8) weiters eingerichtet ist:

- um einen Token bereitzustellen, einen Schlüssel mit don't care Bits enthaltend;
- um das mindestens eine Assoziativ-Speicher-Modul zu veranlassen, den bereitgestellten Token zu speichern; und
- um zu bewirken, dass ein von dem mindestens einen Assoziativ-Speicher-Modul empfangener Token in dem zweiten Speicher gespeichert wird, für den Fall des Findens des bereitgestellten Token durch das mindestens eine Assoziativ-Speicher-Modul mit dem empfangenen Token.

2. Verarbeitungssystem nach Anspruch 1, bei welchem das Steuersystem dazu eingerichtet ist, um zu veranlassen, dass in dem mindestens einen Assoziativ-Speicher-Modul gespeicherte Token in dem zweiten Speicher gespeichert werden.

3. Verarbeitungssystem nach Anspruch 1 oder 2, bei welchem das Steuersystem dazu eingerichtet ist, um zu veranlassen, dass Token in Abhängigkeit von dem Ausmaß der Belegung des Speicherplatzes in dem mindestens einen Assoziativ-Speicher-Modul in dem zweiten Speicher gespeichert werden.

4. Verarbeitungssystem nach einem der Ansprüche 1 bis 3, bei welchem das Steuersystem dazu eingerichtet ist, um zu veranlassen, dass in dem zweiten Speicher gespeicherte Token in Abhängigkeit von dem Ausmaß der Belegung des Speicherraums in dem mindestens einen Assoziativ-Speicher-Modul an das mindestens eine Assoziativ-Speicher-Modul gesendet werden.

5. Verarbeitungssystem nach einem der Ansprüche 1 bis 4, ferner umfassend einen Anweisung-Speicher, bei welchem:

• die von dem mindestens einen Exekutiv-Einheit-Modul ausgegebenen Token ferner Anweisung-Ort-Information enthalten; und
• das mindestens eine Assoziativ-Speicher-Modul (2) dazu eingerichtet ist, die in wenigstens einem von dem empfangenen Token und dem gespeicherten Token, zum Bilden des Paars verwendet, enthaltenen Anweisung-Ort-Information an ein gebildetes Paar von Operanden anzuhängen;
• das mindestens eine Exekutiv-Einheit-Modul (1a) eingerichtet ist:

- zum Lesen des Anweisung-Speichers; und
- zur Verarbeitung eines empfangenes Paares gemäß an einem Ort in dem Anweisung-Speicher gelesenen Anweisungen, bestimmt gemäß den am empfangenen Paar angehängten Anweisung-Ort-Information.

6. Verarbeitungssystem nach Anspruch 5, bei welchem die Anweisung-Ort-Information in einem vorbestimmten Feld innerhalb des Schlüssels der Token enthalten sind.

7. Verarbeitungssystem nach einem der Ansprüche 1 bis 6, bei welchem:

• die von dem mindestens einen Exekutiv-Einheit-Modul ausgegebenen Token ferner mindestens eine Anweisung ('OP CODE') enthalten;
• das mindestens eine Assoziativ-Speicher-Modul dazu eingerichtet ist, die in wenigstens einem von dem empfangenen Token und dem gespeicherten Token, zum Bilden des Paars verwendet, enthaltenen Anweisung an ein gebildetes Paar von Operanden anzuhängen; und
• das mindestens eine Exekutiv-Einheit-Modul dazu eingerichtet ist, ein empfangenes Paar gemäß dem mindestens einen an das empfangene Paar angehängte Anweisung zu verarbeiten.

8. Verarbeitungssystem nach einem der Ansprüche 1 bis 7, bei welchem das Steuersystem dazu eingerichtet ist um zu veranlassen, dass ausgewählte Token in dem zweiten Speicher gespeichert werden, wobei die Token unter Berücksichtigung ihres von dem Operanden verschiedenen Inhalts ausgewählt werden.

9. Verarbeitungssystem nach einem der Ansprüche 1 bis 8, bei welchem das Steuersystem dazu eingerichtet ist, ausgewählte Token in dem zweiten Speicher zu speichern, wobei die Token unter Berücksichtigung ihres Schlüssels ausgewählt werden.

10. Verarbeitungssystem nach Anspruch 8 oder 9, bei welchem:

　• das Steuersystem dazu eingerichtet ist, eine erste Betriebsart und eine zweite Betriebsart anzuwenden, bei denen:

　　- im ersten Modus keiner der von dem mindestens einen Exekutiv-Einheit-Modul ausgegebenen Token in dem zweiten Speicher gespeichert wird; und
　　- im zweiten Modus die ausgewählten Token in dem zweiten Speicher gespeichert werden;

　• das Steuersystem dazu eingerichtet ist, abhängig vom Ausmaß der Belegung des Speicherplatzes in dem mindestens einen Assoziativ-Speicher-Modul vom ersten Modus in den zweiten Modus umzuschalten.

11. Verarbeitungssystem nach Anspruch 10, bei welchem das Steuersystem eingerichtet ist, von dem zweiten Modus in den ersten Modus abhängig von dem Ausmaß der Belegung des Speicherplatzes in dem mindestens einen Assoziativ-Speicher-Modul umzuschalten, wobei das Steuersystem dazu eingerichtet ist, nach dem Umschalten von dem zweiten Modus in den ersten Modus zu veranlassen, dass in dem zweiten Speicher gespeicherte Token an das wenigstens eine Assoziativ-Speicher-Modul gesendet werden.

12. Verarbeitungssystem nach einem der Ansprüche 8 bis 11, bei welchem:

　• die von dem mindestens einen Exekutiv-Einheit-Modul ausgegebenen Token eine Aufgabe-identifizier-Information ('T') und/oder einer Unteraufgabe-Identifizier-Information ('ST') enthalten; und
　• das Steuersystem eingerichtet ist, um zu veranlassen, dass ausgewählte Token in dem zweiten Speicher gespeichert werden, wobei die Token unter Berücksichtigung ihrer Aufgabe-Identifizier-Information und/oder Unteraufgabe-Identifizier-Information ausgewählt werden.

13. Verarbeitungssystem nach Anspruch 12, bei welchem die Aufgabe-Identifikation ('T') und/oder die Unteraufgabe-Identifikation ('ST') in einem vorbestimmten Feld innerhalb des Schlüssels der Token enthalten sind.

14. Verarbeitungssystem nach einem der Ansprüche 5 bis 13, bei welchem das Steuersystem eingerichtet ist, um zu veranlassen, dass ausgewählte Token in dem zweiten Speicher gespeichert werden, wobei das Steuersystem die Token unter Berücksichtigung ihrer Anweisung-Ort-Information auswählt.

15. Verarbeitungssystem nach einem der Ansprüche 1 bis 14, bei welchem das Steuersystem eingerichtet ist, um zu veranlassen, dass das mindestens eine Assoziativ-Speicher-Modul das von dem Steuersystem bereitgestellte Token zu löschen.

16. Verarbeitungssystem nach einem der Ansprüche 1 bis 15, bei welchem:

　• das mindestens eine Assoziativ-Speicher-Modul eingerichtet ist:

　　- zum Empfangen von Token, die einen Schlüssel enthalten, der mehrere Bits umfasst, die auf logische Werte "0", "1" oder "don't care" gesetzt sind; und
　　- zum Suchen eines gespeicherten Token mit einem empfangenen Token durch Vergleichen des Schlüssels der gespeicherten Token mit dem Schlüssel des empfangenen Token, wobei don't care-Bits des empfangenen Token beim Vergleich nicht ausschlaggebend sind;

　• die Steuerung (2f, 8) eingerichtet ist:

　　- um ein Token bereitzustellen, das einen Schlüssel mit don't care-Bits enthält;
　　- zum Senden des bereitgestellten Token an das mindestens eine Assoziativ-Speicher-Modul; und
　　- um einen in dem mindestens einen Assoziativ-Speicher-Modul gespeicherten Token zu veranlassen in dem zweiten Speicher gespeichert zu werden, in dem Fall, dass der gespeicherte Token durch das mindestens eine Assoziativ-Speicher-Modul mit dem vom Steuersystem bereitgestellten Token gefunden wird.

17. Verarbeitungssystem nach einem der Ansprüche 1 bis 16, bei welchem das Mittel zum Senden von Paaren, ausgegeben von dem mindestens einen Assoziativ-Speicher-Modul an das mindestens eine Exekutiv-Einheit-Modul, einen Puffer für Paare umfasst, wobei der Puffer eine im zweiten Speicher oder in einem dritten Speicher erweiterbare Größe aufweist.

18. Verarbeitungssystem nach einem der Ansprüche 1 bis 17, bei welchem die von dem mindestens einen Exekutiv-Einheit-Modul ausgegebenen Token Operanden-Ordnungs-Information ('D1/D0') enthalten.

19. Verarbeitungssystem nach Anspruch 18, bei welchem das mindestens eine Assoziativ-Speicher-Modul (2) eingerichtet ist, um das Paar Operanden zu bilden, indem die Operanden in dem Paar gemäß zumindest in einem von dem empfangenen Token und dem gespeicherten Token, zum Bilden des Paars verwendet, enthaltenen Operanden-Ordnungs-Information geordnet werden.

20. Verarbeitungssystem nach Anspruch 18 oder 19, bei welchem:

    • die Operanden-Ordnungs-Information in einem vorbestimmten Feld innerhalb des Schlüssels der Token enthalten ist; und
    • das mindestens eine Assoziativ-Speicher-Modul (2) dazu eingerichtet ist, nach wenigstens einem gespeicherten Token mit einem empfangenen Token zu suchen, die eine unterschiedliche Operanden-Ordnungs-Information voneinander aufweisen.

21. Verarbeitungssystem nach Anspruch 18 oder 19, bei welchem:

    • die Operanden-Ordnungs-Information in einem vorbestimmten Feld innerhalb des Schlüssels der Token enthalten ist, wobei die Operanden-Ordnungs-Information aus zwei möglichen Werten ausgewählt ist/wird;
    • das Steuersystem dazu eingerichtet ist, die Operanden-Ordnungs-Information eines von dem mindestens einen Assoziativ-Speicher zum anderen Wert zu ändern, bevor das mindestens eine Assoziativ-Speicher-Modul (2) das empfangene Token speichert; und
    • das mindestens eine Assoziativ-Speicher-Modul (2) dazu eingerichtet ist, nach wenigstens einem gespeicherten Token mit einem empfangenen Token zu suchen, die eine identische Operanden-Ordnungs-Information aufweisen.

22. Verarbeitungssystem nach einem der Ansprüche 1 bis 21, bei welchem das mindestens eine Assoziativ-Speicher-Modul dazu eingerichtet ist, in dem Fall, dass das mindestens eine Assoziativ-Speicher-Modul nicht mindestens einen gespeicherten Token mit dem empfangenen Token findet, einen empfangenen Token zu speichern.

23. Verarbeitungssystem nach einem der Ansprüche 1 bis 22, bei welchem das mindestens eine Assoziativ-Speicher-Modul dazu eingerichtet ist, einen gespeicherten Token zu löschen, in dem Fall, dass das mindestens eine Assoziativ-Speicher-Modul ein Paar mit einem empfangenen Token und dem gespeicherten Token bildet.

24. Verarbeitungssystem nach einem der Ansprüche 1 bis 22, bei welchem:

    • die von dem mindestens einen Exekutiv-Einheit-Modul ausgegebenen Token ferner eine Paarzahl ('n') enthalten; und
    • das Steuersystem dazu eingerichtet ist, um zu veranlassen, dass das mindestens eine Assoziativ-Speicher-Modul, eine Anzahl von Paaren bildet, basierend auf ein und demselben von der mindestens einer Exekutiv-Einheit ausgegeben Token und anderen Token, wobei die Anzahl der Paare durch die Paarzahl bestimmt wird, die in demselben Token enthalten ist.

25. Verarbeitungssystem nach einem der Ansprüche 1 bis 24, mehrere Exekutiv-Einheit-Modulen umfassend, wobei die Mittel zum Senden von Paaren, die von dem mindestens einen Assoziativ-Speicher-Modul an die Exekutiv-Einheit-Module ausgegeben werden, einen Paarschalter (SW2) enthält, dazu eingerichtet ein Paar zu einer beliebigen der Exekutiv-Einheit-Modulen zu senden.

26. Verarbeitungssystem nach einem der Ansprüche 1 bis 25, mehreren Assoziativ-Speicher-Module enthaltend, wobei die Mittel zum Senden von Token, von dem mindestens einen Exekutiv-Einheit-Modul an die Assoziativ-Speicher-Module ausgegeben, einen Tokenschalter (SW1) beinhaltet, dazu eingerichtet, einen Token an eine beliebige der Exekutiv-Einheit zu senden, wobei der Tokenschalter den Token zu einem der Assoziativ-Speicher-Module sendet, ausgewählt auf der Basis des Schlüssels des Token.

27. Datenflussbasiertes Informationsverarbeitungsverfahren, umfassend die Schritte:

    a)- Suchen mit einem ersten Token nach mindestens einen zweiten Token durch ein Assoziativ-Speicher-Modul, das Token speichert, indem ein in jedem der Token enthaltener Schlüssel im Assoziativ-Speicher mit einem in dem ersten Token enthaltenen Schlüssel verglichen wird;

b)- falls in Schritt a) kein zweiter Token gefunden wird, Speichern des ersten Token in dem Assoziativ-Speicher-Modul;

c)- falls in Schritt a) ein zweiter Token gefunden wird, Paaren eines Operanden, der in dem ersten Token enthalten ist, und eines Operanden, der in dem zweiten Token enthalten ist;

d)- Verarbeiten der gepaarten Operanden zum Bereitstellen mindestens eines dritten Token;

e)- Wiederholen der Schritte a) bis d) mit dem mindestens einen dritten Token anstelle des ersten Token;

wobei das Verfahren ferner einen Schritt umfasst, des:

f)- Zwischenspeichern des ersten Token in einem zweiten Speicher vor mindestens einem der Schritte a) bis c)

wobei Schritt f) abhängig von dem vom Operanden unterschiedlichen Inhalt des ersten Token durchgeführt wird oder nicht; und wobei:

• das Assoziativ-Speicher-Modul dazu eingerichtet ist, Token zu speichern, die einen Schlüssel enthalten, eine Vielzahl von Bits umfassend, die auf logische Werte "0", "1" oder "don't care" gesetzt sind;

• Schritt a) das Suchen mit dem ersten Token nach mindestens einem zweiten Token durch das Assoziativ-Speicher-Modul umfasst, indem ein Schlüssel, enthalten in jedem der Token in dem Assoziativ-Speicher, mit dem Schlüssel, der in dem ersten Token enthalten ist verglichen wird, wobei don't care-Bits des gespeicherten Token beim Vergleich nicht ausschlaggebend sind; und

• Schritt f) die Teilschritte umfasst von:

- Bereitstellen eines Token, der einen Schlüssel mit don't care-Bits enthält;

- Speichern des bereitgestellten Token in dem Assoziativ-Speicher-Modul; und

- wenn in Schritt a) der bereitgestellte Token gefunden wird, Zwischenspeichern des ersten Token in einem zweiten Speicher.

28. Verarbeitungsverfahren nach Anspruch 27, bei welchem nach dem Zwischenspeichern des ersten Token gemäß Schritt f), die Schritte a) bis d) mit dem ersten Token durchgeführt werden.

29. Verarbeitungsverfahren nach Anspruch 27 oder 28, bei welchem:

• Schritt c) den Teilschritt umfasst von:

- Anhängen an die gepaarten Operanden von Anweisung-Ort-Information, enthalten in zumindest einem von dem ersten Token und dem zweiten Token;

• Schritt d) den Teilschritt umfasst von:

- Verarbeiten der gepaarten Operanden gemäß Anweisungen, die an einem Ort in einem Anweisung-Speicher gelesen werden, der gemäß den an die gepaarten Operanden angehängten Anweisung-Ort-Information bestimmt ist/wird.

30. Verarbeitungsverfahren nach einem der Ansprüche 27 bis 29, bei welchem Schritt f) abhängig von dem Ausmaß der Belegung des Speicherplatzes im Assoziativ-Speicher-Modul durchgeführt wird oder nicht.

31. Verarbeitungsverfahren nach einem der Ansprüche 27 bis 30, bei welchem Schritt f) ab dem Zeitpunkt ausgeführt ist/wird, wenn die Belegung des Speicherplatzes im Assoziativ-Speicher-Modul ein vorbestimmtes Ausmaß überschreitet oder voll ist.

32. Verarbeitungsverfahren nach einem der Ansprüche 27 bis 31, bei welchem die Zwischenspeicherung der in Schritt f) gespeicherten Token in Abhängigkeit von dem Belegungsgrad des Speicherplatzes in dem Assoziativ-Speicher-Modul beendet wird.

33. Verarbeitungsverfahren nach einem der Ansprüche 27 bis 32, bei welchem Schritt f) in Abhängigkeit von einer in dem ersten Token enthaltenen Aufgabenidentifizierungsinformation und/oder Teilaufgabenidentifizierungsinformation durchgeführt wird oder nicht.

34. Verarbeitungsverfahren nach einem der Ansprüche 29 bis 33, bei welchem Schritt f) in Abhängigkeit von der in dem ersten Token enthaltenen Anweisung-Ort-Information durchgeführt wird oder nicht.

35. Verarbeitungsverfahren nach einem der Ansprüche 27 bis 34, bei welchem Schritt c) umfasst:

- Paaren des in dem ersten Token enthaltenen Operanden und des in dem zweiten Token enthaltenen Operanden, durch Ordnen der Operanden gemäß Operanden-Ordnungs-Information, enthalten in zumindest einem von dem ersten Token und dem zweiten Token.

36. Verarbeitungsverfahren nach einem der Ansprüche 27 bis 35, bei welchem Schritt f) das Löschen des bereitgestellten Token in dem zweiten Speicher am Ende der Zwischenspeicherung umfasst.

**37.** Verarbeitungsverfahren nach einem der Ansprüche 27 bis 36, umfassend einen Schritt des:

> g)- temporäres Übertragen von in dem Assoziativ-Speicher-Modul gespeicherten Token zu dem zweiten Speicher;

wobei Schritt g) für einen gespeicherten Token in Abhängigkeit von von dem Operanden verschiedenen Inhalt des gespeicherten Token durchgeführt wird oder nicht.

**38.** Verarbeitungsverfahren nach Anspruch 37, bei welchem Schritt g) für einen gespeicherten Token durchgeführt wird, basierend auf gleichen Inhaltskriterien wie bei der Durchführung des Schritts f) für/an den ersten Token.

**39.** Verarbeitungsverfahren nach Anspruch 37 oder 38, umfassend den Schritt des Durchführens von den Schritten a) bis d) für/an am Ende ihrer Zwischenspeicherung an den zweiten Speicher übertragenen Token.

**40.** Verarbeitungsverfahren nach einem der Ansprüche 37 bis 39, bei welchem:

> • das Assoziativ-Speicher-Modul dazu eingerichtet ist, nach mindestens einem gespeicherten Token mit einem Suchtoken zu suchen, der mehrere Bits umfasst, die auf logische Werte "0", "1" oder "don't care" gesetzt sind, indem der Schlüssel der gespeicherten Token mit dem Schlüssel des SuchToken verglichen wird, wobei don't care-Bits des SuchToken für die Suche nicht ausschlaggebend sind;
> • Schritt g) die Teilschritte umfasst von:
>
>> - Bereitstellen eines Token, der einen Schlüssel mit don't care-Bits enthält;
>> - Suchen mit dem bereitgestellten Token nach mindestens einem zweiten Token durch das Assoziativ-Speicher-Modul;
>> - temporäres Übertragen von in dem Assoziativ-Speicher-Modul gefundenen Token mit dem bereitgestellten Schlüssel an den zweiten Speicher.

**41.** Verarbeitungsverfahren nach einem der Ansprüche 27 bis 40, bei welchem Schritt c) das Löschen des zweiten Token in dem Assoziativ-Speicher-Modul umfasst.

**42.** Verarbeitungsverfahren nach einem der Ansprüche 27 bis 40, bei welchem:

> • der erste Token und die gespeicherten Token jeweils eine Paarzahl ('n') enthalten;

> • Schritt c) die Teilschritte umfasst von:
>
>> - c1) Paaren des in dem ersten Token enthaltenen Operanden und des in jedem zweiten Token enthaltenen Operanden;
>> - c2) Verringern der Paarzahl in jedem zweiten Token um eins und wenn die Paarzahl in einem zweiten Token gleich Null wird, Löschen des zweiten Token in dem Assoziativ-Speicher-Modul;
>> - c3) Verringern der Paarzahl in dem ersten Token um die Anzahl der im Teilschritt c1) gebildeten Paare und wenn die Paarzahl im ersten Token grösser oder gleich eins bleibt, Speichern des ersten Token in dem Assoziativ-Speicher-Modul.

**43.** Verarbeitungsverfahren nach einem der Ansprüche 27 bis 40, bei welchem Schritt a) das Suchen mit dem ersten Token nach mindestens einem zweiten Token durch ein Ausgewähltes Assoziativ-Speicher-Modul unter mehreren Assoziativ-Speicher-Modulen umfasst, jeden Token speichernd, wobei das Assoziativ-Speicher-Modul anhand des in dem ersten Token enthaltenen Schlüssel ausgewählt wird.

**44.** Verarbeitungsverfahren nach Anspruch 43, bei welchem:

> • der erste Token und die gespeicherten Token jeweils eine Paarzahl ('n') enthalten;
> • in Schritt a), wenn die Paarzahl im ersten Token einen Anfangswert grösser eins aufweist, Suchen mit dem ersten Token nach mindestens einem zweiten Token durch jedes von mehreren Assoziativ-Speicher-Modulen, Token speichernd;
> • in Schritt b), wenn in Schritt a) kein zweiter Token gefunden wird für ein assoziatives Speichermodul, Speichern des ersten Token mit seiner Paarzahl auf Null gesetzt in dem Assoziativ-Speicher-Modul;
> • Schritt c) die Teilschritte umfasst von:
>
>> - c1) wenn in Schritt a) ein zweiter Token in einem Assoziativ-Speicher-Modul gefunden ist/wird, Paaren des im ersten Token enthaltenen Operanden und des im zweiten Token enthaltenen Operanden;
>> - c2) Speichern des ersten Token mit seiner Paarzahl, die auf die Anzahl der im Teilschritt c1) gebildeten Paare gesetzt ist in dem Assoziativ-Speicher-Modul;
>> - c3) Erhöhen der Paarzahl in einem zweiten Token um eins, wenn der Anfangswert der Paarzahl des zweiten Token grösser als eins war;

wobei das Verfahren ferner die Schritte umfasst:

- Lesen der in dem in jedem Assoziativ-Speicher-Modul gespeicherten ersten Token enthaltenen Paarzahl;
- Vergleichen der Summe der gelesenen Paarzahlen mit dem Anfangswert der Paarzahl des ersten Token; und
- wenn die Summe der gelesenen Paarzahlen gleich dem Anfangswert der Paarzahl des ersten Token ist, Löschen des ersten Token in jedem Assoziativ-Speicher-Modul.

## Revendications

1. Un système de traitement d'informations basé sur un flux de données, comprenant :

   • au moins un module d'unité exécutive (1a) adapté pour fournir en sortie des jetons contenant au moins une clé et un opérande;
   • au moins un module de mémoire associative (2) adapté pour:

      - recevoir un jeton ;
      - stocker un jeton reçu ;
      - rechercher au moins un jeton stocké avec un jeton reçu en comparant la clé des jetons stockés avec la clé du jeton reçu ;
      - former une paire d'opérandes à partir d'un jeton reçu et d'un jeton stocké trouvé avec le jeton reçu ;
      - fournir en sortie la paire formée ; et
      - effacer un jeton stocké ;

   • une deuxième mémoire (7) adaptée pour stocker des jetons et pour fournir en sortie des jetons stockés ;
   • des moyens pour envoyer des paires fournies en sortie par l'au moins un module de mémoire associative à l'au moins un module d'unité exécutive ;
   • des moyens pour envoyer des jetons fournis en sortie par l'au moins un module d'unité exécutive à l'au moins un module de mémoire associative ;
   • un système de contrôle (2f, 8) adapté pour:

      - provoquer le stockage des jetons fournies en sortie par l'au moins un module d'unité exécutive dans la deuxième mémoire ; et
      - envoyer des jetons stockés dans la deuxième mémoire à l'au moins un module de mémoire associative ;

   dans lequel :

   • l'au moins un module de mémoire associative est en outre adapté pour :

      - stocker des jetons contenant une clé comprenant une pluralité de bits qui sont mis à des valeurs logiques "0", "1" ou "indifférent" ; et
      - rechercher un jeton stocké avec un jeton reçu en comparant la clé des jetons stockés avec la clé du jeton reçu, dans lequel les bits indifférents de jetons stockés ne sont pas déterminants dans la comparaison ;

   • le système de contrôle (2f, 8) est en outre adapté pour :

      - fournir un jeton contenant une clé avec des bits indifférents ;
      - amener l'au moins un module de mémoire associative à stocker le jeton fourni ; et
      - provoquer le stockage d'un jeton reçu par l'au moins un module de mémoire associative dans la deuxième mémoire dans le cas où le jeton fourni est trouvé par l'au moins un module de mémoire associative avec le jeton reçu.

2. Le système de traitement selon la revendication 1, dans lequel le système de contrôle est conçu pour provoquer le stockage de jetons stockés dans l'au moins un module de mémoire associative dans la deuxième mémoire.

3. Le système de traitement selon la revendication 1 ou 2, dans lequel le système de contrôle est adapté pour provoquer le stockage de jetons dans la deuxième mémoire en fonction du degré d'occupation de l'espace mémoire dans l'au moins un module de mémoire associative.

4. Le système de traitement selon l'une quelconque des revendications 1 à 3, dans lequel le système de contrôle est adapté pour provoquer l'envoi de jetons stockés dans la deuxième mémoire à l'au moins un module de mémoire associative en fonction du degré d'occupation de l'espace mémoire dans l'au moins un module de mémoire associative.

5. Le système de traitement selon l'une quelconque des revendications 1 à 4, comprenant en outre une mémoire d'instructions, dans lequel :

   • les jetons fournis en sortie par l'au moins un module d'unité exécutive contiennent en outre une information de localisation d'instruction(s) ; et
   • l'au moins un module de mémoire associative (2) est adapté pour joindre à une paire d'opérandes formée, l'information de localisation d'instruction(s) contenue dans au moins l'un parmi le jeton reçu et le jeton stocké utilisé pour former la paire ;

• l'au moins un module d'unité exécutive (la) est adapté pour :

- lire la mémoire d'instructions ; et
- traiter une paire reçue en fonction d'instructions lues à un emplacement dans la mémoire d'instructions déterminé en fonction de l'information de localisation d'instruction(s) annexée à la paire reçue.

**6.** Le système de traitement selon la revendication 5, dans lequel l'information de localisation d'instruction(s) est contenue dans un champ prédéterminé dans la clé des jetons.

**7.** Le système de traitement selon l'une quelconque des revendications 1 à 6, dans lequel :

• les jetons fournis en sortie par l'au moins un module d'unité exécutive contiennent en outre au moins une instruction ('OP CODE') ;
• l'au moins un module de mémoire associative est adapté pour joindre à une paire d'opérandes formée l'au moins une instruction contenue dans au moins l'un parmi le jeton reçu et le jeton stocké utilisé pour former la paire ; et
• l'au moins un module d'unité exécutive est adapté pour traiter une paire reçue conformément à l'au moins une instruction jointe à la paire reçue.

**8.** Le système de traitement selon l'une quelconque des revendications 1 à 7, dans lequel le système de contrôle est adapté pour provoquer le stockage de jetons sélectionnés dans la deuxième mémoire, les jetons étant sélectionnés en considération de leur contenu autre que l'opérande.

**9.** Le système de traitement selon l'une quelconque des revendications 1 à 8, dans lequel le système de contrôle est adapté pour provoquer le stockage de jetons sélectionnés dans la deuxième mémoire, les jetons étant sélectionnés en considération de leur clé.

**10.** Le système de traitement selon la revendication 8 ou 9, dans lequel :

• le système de contrôle est adapté pour appliquer un premier mode de fonctionnement et un deuxième mode de fonctionnement dans lequel:

- dans le premier mode, aucun des jetons fournis en sortie par l'au moins une unité exécutive n'est stockée dans la deuxième mémoire ; et
- dans le deuxième mode, les jetons sélectionnés sont stockés dans la deuxième mémoire ;

• le système de contrôle est adapté pour passer du premier mode au deuxième mode en fonction du degré d'occupation de l'espace mémoire dans l'au moins un module de mémoire associative.

**11.** Le système de traitement selon la revendication 10, dans lequel le système de contrôle est adapté pour passer du deuxième mode au premier mode en fonction du degré d'occupation de l'espace mémoire dans l'au moins un module de mémoire associative, le système de contrôle étant adapté pour provoquer l'envoi de jetons stockés dans la deuxième mémoire à l'au moins un module de mémoire associative après passage du deuxième mode au premier mode.

**12.** Le système de traitement selon l'une quelconque des revendications 8 à 11, dans lequel:

• les jetons fournis en sortie par l'au moins un module d'unité exécutive contiennent une information d'identification de tâche ('T') et/ou une information d'identification de sous-tâche ('ST'); et
• le système de contrôle est adapté pour provoquer le stockage des jetons sélectionnés dans la deuxième mémoire, les jetons étant sélectionnés en considération de leurs informations d'identification de tâche et/ou information d'identification de sous-tâche.

**13.** Le système de traitement selon la revendication 12, dans lequel l'identification de tâche ('T') et/ou l'identification de sous-tâche ('ST') sont contenus dans un champ prédéterminé dans la clé des jetons.

**14.** Le système de traitement selon l'une quelconque des revendications 5 à 13, dans lequel le système de contrôle est adapté pour provoquer le stockage de jetons sélectionnés dans la deuxième mémoire, le système de contrôle sélectionnant les jetons en considération de leur information de localisation d'instruction(s).

**15.** Le système de traitement selon l'une quelconque des revendications 1 à 14, dans lequel le système de contrôle est adapté pour amener l'au moins un module de mémoire associative à effacer le jeton fourni par le système de contrôle.

**16.** Le système de traitement selon l'une quelconque des revendications 1 à 15, dans lequel :

- l'au moins un module de mémoire associative est adapté pour :

- recevoir des jetons contenant une clé comprenant une pluralité de bits qui sont mis à des valeurs logiques "0", "1 "ou" indifférent" ; et
- rechercher un jeton stocké avec un jeton reçu en comparant la clé des jetons stockés avec la clé du jeton reçu, dans lequel les bits indifférents du jeton reçu ne sont pas déterminants dans la comparaison ;

• le système de contrôle (2f, 8) est adapté pour :

- fournir un jeton contenant une clé avec des bits indifférents ;
- envoyer le jeton fourni à l'au moins un module de mémoire associative ; et
- provoquer le stockage d'un jeton stocké dans l'au moins un module de mémoire associative dans la deuxième mémoire dans le cas où le jeton stocké est trouvé par l'au moins un module de mémoire associative avec le jeton fourni par le système de contrôle.

17. Le système de traitement selon l'une quelconque des revendications 1 à 16, dans lequel les moyens pour envoyer des paires fournies en sortie par l'au moins un module de mémoire associative à l'au moins un module d'unité exécutive comprennent un tampon pour paires, ledit tampon ayant une taille extensible dans la deuxième mémoire ou dans une troisième mémoire.

18. Le système de traitement selon l'une quelconque des revendications 1 à 17, dans lequel les jetons fournis en sortie par l'au moins un module d'unité exécutive contiennent une information d'ordre d'opérande ('D1/D0').

19. Le système de traitement selon la revendication 18, dans lequel l'au moins un module de mémoire associative (2) est adapté pour former la paire d'opérandes en ordonnant les opérandes dans la paire en fonction de l'information d'ordre d'opérande contenue dans au moins l'un parmi le jeton reçu et le jeton stocké utilisé pour former la paire.

20. Le système de traitement selon la revendication 19 ou 20, dans lequel :

• l'informations d'ordre d'opérande est contenue dans un champ prédéterminé dans la clé des jetons ; et
• l'au moins un module de mémoire associative (2) est adapté pour rechercher au moins un jeton stocké avec un jeton reçu qui ont une information d'ordre d'opérande différente l'un de l'autre.

21. Le système de traitement selon la revendication 19 ou 20, dans lequel :

• l'information d'ordre d'opérande est contenue dans un champ prédéterminé dans la clé des jetons, l'information d'ordre d'opérande étant sélectionnée parmi deux valeurs possibles ;
• le système de contrôle est adapté pour modifier l'information d'ordre d'opérande d'un jeton reçu par l'au moins une mémoire associative en l'autre valeur possible avant que l'au moins un module de mémoire associative (2) ne stocke le jeton reçu ; et
• l'au moins un module de mémoire associative (2) est adapté pour rechercher au moins un jeton stocké avec un jeton reçu qui a une information d'ordre d'opérande identique.

22. Le système de traitement selon l'une quelconque des revendications 1 à 21, dans lequel l'au moins un module de mémoire associative est adapté pour stocker un jeton reçu dans le cas où l'au moins un module de mémoire associative ne trouve pas au moins un jeton stocké avec le jeton reçu.

23. Le système de traitement selon l'une quelconque des revendications 1 à 22, dans lequel l'au moins un module de mémoire associative est adapté pour effacer un jeton stocké dans le cas où l'au moins un module de mémoire associative forme une paire avec un jeton reçu et le jeton stocké.

24. Le système de traitement selon l'une quelconque des revendications 1 à 22, dans lequel :

• les jetons fournis en sortie par l'au moins un module d'unité exécutive contiennent en outre un nombre de paires ('n') ; et
• le système de contrôle est adapté pour amener l'au moins un module de mémoire associative à former un nombre de paires basé sur un même jeton fourni en sortie par l'au moins une unité exécutive et d'autres jetons, ledit nombre de paires étant déterminé par le nombre de paires contenu dans le même jeton.

25. Le système de traitement selon l'une quelconque des revendications 1 à 24, comprenant plusieurs modules d'unité exécutive, dans lequel les moyens pour envoyer des paires délivrées par l'au moins un module de mémoire associative aux modules d'unité exécutive comprennent un commutateur de paires (SW2) adapté pour envoyer une paire à l'un quelconque des modules d'unité exécutive.

**26.** Le système de traitement selon l'une quelconque des revendications 1 à 25, comprenant plusieurs modules de mémoire associative, dans lequel les moyens pour envoyer des jetons fournis en sortie par l'au moins un module d'unité exécutive aux modules de mémoire associative comprennent un commutateur de jetons (SW1) adapté pour envoyer un jeton à l'un quelconque des modules de mémoire associative, le commutateur de jetons envoyant le jeton à l'un des modules de mémoire associative sélectionné sur la base de la clé du jeton.

**27.** Un procédé de traitement d'informations basé sur un flux de données, comprenant les étapes consistant à :

    a) rechercher avec un premier jeton au moins un deuxième jeton à travers un module de mémoire associative stockant des jetons en comparant une clé contenue dans chacun des jetons dans la mémoire associative avec une clé contenue dans le premier jeton ;
    b) si aucun deuxième jeton n'est trouvé à l'étape a), stocker le premier jeton dans le module de mémoire associative ;
    c) si un deuxième jeton est trouvé à l'étape a), appairer un opérande contenu dans le premier jeton et un opérande contenu dans le deuxième jeton ;
    d) traiter les opérandes appariés pour fournir au moins un troisième jeton ;
    e) répéter les étapes a) à d) avec l'au moins un troisième jeton à la place du premier jeton;

le procédé comprenant en outre une étape consistant à :

    f) stocker temporairement le premier jeton dans une deuxième mémoire avant au moins l'une des étapes a) à c)

dans lequel l'étape f) est exécutée ou non en fonction du contenu du premier jeton autre que l'opérande ; et dans lequel :

    • le module de mémoire associative est adapté pour stocker des jetons contenant une clé comprenant une pluralité de bits qui sont mis à des valeurs logiques "0", "1" ou "indifférent" ;
    • l'étape a) comprend la recherche avec le premier jeton d'au moins un deuxième jeton à travers le module de mémoire associative en comparant une clé contenue dans chacun des jetons dans la mémoire associative avec la clé contenue dans le premier jeton, dans lequel les bits indifférents des jetons stockés ne sont pas déterminants dans la comparaison ; et
    • l'étape f) comprend les sous-étapes consistant à :

    - fournir un jeton contenant une clé avec des bits indifférents ;
    - stocker le jeton fourni dans le module de mémoire associative ; et
    - si le jeton fourni est trouvé à l'étape a), stocker temporairement le premier jeton dans une deuxième mémoire.

**28.** Le procédé de traitement selon la revendication 27, dans lequel, après stockage temporaire du premier jeton conformément à l'étape f), appliquer les étapes a) à d) au premier jeton.

**29.** Le procédé de traitement selon la revendication 27 ou 28, dans lequel:

    • l'étape c) comprend la sous-étape consistant à :

    - joindre aux opérandes appariés une information de localisation d'instruction(s) contenue dans au moins l'un parmi le premier jeton et le deuxième jeton ;

    • l'étape d) comprend la sous-étape consistant à :

    - traiter les opérandes appariés conformément aux instructions lues à un emplacement dans une mémoire d'instructions déterminé conformément à l'information de localisation d'instruction(s) jointes aux opérandes appariés.

**30.** Le procédé de traitement selon l'une quelconque des revendications 27 à 29, dans lequel l'étape f) est exécutée ou non en fonction du degré d'occupation de l'espace mémoire dans le module de mémoire associative.

**31.** Le procédé de traitement selon l'une quelconque des revendications 27 à 30, dans lequel l'étape f) est exécutée à partir du moment où l'occupation de l'espace mémoire dans le module mémoire associative dépasse un degré prédéterminé ou est pleine.

**32.** Le procédé de traitement selon l'une quelconque des revendications 27 à 31, dans lequel il est mis fin au stockage temporaire des jetons stockés à l'étape f) en fonction du degré d'occupation de l'espace mémoire dans le module de mémoire associative.

**33.** Le procédé de traitement selon l'une quelconque des revendications 27 à 32, dans lequel l'étape f) est exécutée ou non en fonction d'une information d'identification de tâche et/ou d'une information d'identification de sous-tâche contenue dans le premier jeton.

34. Le procédé de traitement selon l'une quelconque des revendications 29 à 33, dans lequel l'étape f) est exécutée ou non en fonction des informations de localisation d'instructions contenues dans le premier jeton.

35. Le procédé de traitement selon l'une quelconque des revendications 27 à 34, dans lequel l'étape c) comprend :

- l'appariement de l'opérande contenu dans le premier jeton et de l'opérande contenu dans le deuxième jeton en ordonnant les opérandes selon une information d'ordre d'opérande contenue dans au moins l'un parmi le premier jeton et le deuxième jeton.

36. Le procédé de traitement selon l'une quelconque des revendications 27 à 35, dans lequel l'étape f) comprend l'effacement du jeton fourni dans la deuxième mémoire à la fin du stockage temporaire.

37. Le procédé de traitement selon l'une quelconque des revendications 27 à 36, comprenant une étape consistant à :

g) transférer temporairement des jetons stockés dans le module de mémoire associative dans la deuxième mémoire ;

dans lequel l'étape g) est exécutée ou non pour un jeton stocké en fonction du contenu du jeton stocké autre que l'opérande.

38. Le procédé de traitement selon la revendication 37, dans lequel l'étape g) est exécutée pour un jeton stocké sur la base des mêmes critères de contenu que pour effectuer l'étape f) pour le premier jeton.

39. Le procédé de traitement selon la revendication 37 ou 38, comprenant l'étape consistant à appliquer les étapes a) à d) aux jetons transférés dans la deuxième mémoire à la fin de leur stockage temporaire.

40. Le procédé de traitement selon l'une quelconque des revendications 37 à 39, dans lequel :

• le module de mémoire associative est adapté pour rechercher au moins un jeton stocké avec un jeton de recherche comprenant une pluralité de bits qui sont mis à des valeurs logiques "0", 1 "ou" indifférent", en comparant la clé des jetons stockés avec la clé du jeton de recherche, dans lequel les bits indifférents du jeton de recherche ne sont pas déterminants pour la recherche ;

• l'étape g) comprend les sous-étapes consistant à :

- fournir un jeton contenant une clé avec des bits indifférents ;
- rechercher avec le jeton fourni au moins un deuxième jeton à travers le module de mémoire associative ;
- transférer temporairement à la deuxième mémoire des jetons trouvés dans le module de mémoire associative avec la clé fournie.

41. Le procédé de traitement selon l'une quelconque des revendications 27 à 40, dans lequel l'étape c) comprend l'effacement du deuxième jeton dans le module de mémoire associative.

42. Le procédé de traitement selon l'une quelconque des revendications 27 à 40, dans lequel :

• le premier jeton et les jetons stockés contiennent chacun un nombre de paires ('n') ;
• l'étape c) comprend les sous-étapes consistant à :

- c1) apparier l'opérande contenu dans le premier jeton et l'opérande contenu dans chaque deuxième jeton ;
- c2) diminuer de un le nombre de paires dans chaque deuxième jeton et si le nombre de paires dans un deuxième jeton devient égal à zéro, effacer le deuxième jeton dans le module de mémoire associative ;
- c3) diminuer le nombre de paires dans le premier jeton par le nombre de paires formées dans la sous-étape c1) et si le nombre de paires dans le premier jeton reste supérieur ou égal à un, stocker le premier jeton dans le module de mémoire associative.

43. Le procédé de traitement selon l'une quelconque des revendications 27 à 40, dans lequel l'étape a) comprend la recherche avec le premier jeton d'au moins un deuxième jeton à travers un module de mémoire associative sélectionné parmi plusieurs modules de mémoire associatives stockant chacun des jetons, le module de mémoire associative étant sélectionné sur la base de la clé contenue dans le premier jeton.

44. Le système de traitement selon la revendication 43, dans lequel :

• le premier jeton et les jetons stockés contiennent chacun un nombre de paires ('n') ;
• à l'étape a), si le nombre de paires dans le premier jeton a une valeur initiale supérieure à un, rechercher avec le premier jeton au moins un deuxième jeton à travers chacun d'une pluralité de modules de mémoire associatives stockant des jetons ;

• à l'étape b), si aucun deuxième jeton n'est trouvé à l'étape a) pour un module de mémoire associative, mémoriser le premier jeton dont le nombre de paires est mis à zéro dans le module de mémoire associative ;

• l'étape c) comprend les sous-étapes consistant à :

    - c1) si un deuxième jeton est trouvé à l'étape a) dans un module de mémoire associative, apparier l'opérande contenu dans le premier jeton et l'opérande contenu dans le deuxième jeton ;

    - c2) stocker dans le module de mémoire associative le premier jeton avec son nombre de paires fixé au nombre de paires formées dans la sous-étape c1) ;

    - c3) augmenter le nombre de paires d'un deuxième jeton de un si la valeur initiale du nombre de paires du deuxième jeton était supérieure à un ;

le procédé comprenant en outre les étapes consistant à :

    - lire le nombre de paires contenu dans le premier jeton stocké dans chaque module de mémoire associative ;

    - comparer la somme des nombres de paires lus avec la valeur initiale du nombre de paires du premier jeton ; et

    - si la somme des nombres de paires lus est égale à la valeur initiale du nombre de paires du premier jeton, effacer le premier jeton dans chaque module de mémoire associative.

**Fig. 1**

2d

| KEY | DATA |
|-----|------|

2a 2b

| KEY | DATA |
|-----|------|
| · | · |
| · | · |
| · | · |
| · | · |
| · | · |
| KEY | DATA |
| · | · |
| · | · |
| · | · |
| · | · |
| · | · |
| · | · |

| KEY | DATA |
|-----|------|

2c

**Fig. 2**

(a)

| OP CODE(S) | NEXT INSTRUCTION ADDRESS(ES) |
|------------|------------------------------|

(b)

| INSTRUCTION ADDRESS | CONTEXT | DATA |
|---------------------|---------|------|

KEY

(c)

| INSTRUCTION ADDRESS | CONTEXT | DATA2 | DATA1 |
|---------------------|---------|-------|-------|

**Fig. 3**

Fig. 4

EP 1 902 362 B1

Fig. 5

Fig. 6

(a)

| T | ST | D1/D0 | An | CONTEXT | MASK CODE | n | OP CODE | DATA |
|---|----|-------|----|---------|-----------|---|---------|------|

KEY

(b)

| T | ST | An | CONTEXT | OP CODE | DATA 2 | DATA 1 |
|---|----|----|---------|---------|--------|--------|

# Fig. 7

100

receiving token at switch SW 1      101

sending token to AMM identified in its "hash function" field

searching for tokens in the AMM that have a key matching the key of received token      102

search successful ?      103

NO → storing the received token in the AMM      104

YES → 105 → is a "cover token" among the found tokens

NO → formation of data pairs from received token and each found token      106

YES → writing received token into RAM with label "token unloaded by cover"      107

# Fig. 8

**Fig. 9**

Fig. 10

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 0886224 A
- WO 9908172 A
- WO 9942927 A
- US 6243800 B
- US 6298433 B
- US 6370634 B

### Non-patent literature cited in the description

- **VSEVOLOD S. BURTSEV.** Optical principles of information processing in a supercomputer architecture. *Optical Computing and Processing,* 1991, vol. 1 (4), 269-274
- **V. S. BURTSEV ; V. B. FYODOROV.** Optical associative memory for high-performance digital computers with nontraditional architectures. *Optical Computing and Processing,* 1991, vol. 1 (4), 275-288
- **VSEVOLOD. S. BURTSEV.** Problems of work loading in parallel computing systems and a new supercomputer architecture. *High Performance Computing Conference,* September 1994
- Associative memory of new generation supercomputers based on optical information processing principles. **BURTSEV V S et al.** Optical Computing And Processing. Taylor And Francis, 01 July 1992, vol. 2, 161-172
- Application of optical methods of information processing in a supercomputer architecture. **BURTSEV V S.** International Journal Of Optoelectronics (Incl. Optical Computing & Processing). Taylor & Francis, 01 November 1994, vol. 9, 489-503